# EUROPÄISCHE PATENTSCHRIFT

(11) **EP 0 944 638 B1**
(45) Veröffentlichungstag und Bekanntmachung des Hinweises auf die Patenterteilung: **11.06.2003**
(21) Anmeldenummer: 97952029.3
(22) Anmeldetag: 02.12.1997
(51) Int. Cl.: C07F 15/00, C07F 9/50, C08G 67/02, B01J 31/16

(54) **CIS-VERBRÜCKTE METALLKOMPLEXE**
CIS-BRIDGED METAL COMPLEXES
COMPLEXES METALLIQUES PONTES EN CIS

(30) Priorität: 12.12.1996 DE 19651685
(43) Veröffentlichungstag der Anmeldung: 29.09.1999
(73) Patentinhaber: BASF AKTIENGESELLSCHAFT, 67056 Ludwigshafen (DE)
(72) Erfinder: SLANY, Michael, D-67227 Frankenthal (DE); HÖHN, Arthur, D-67281 Kirchheim (DE)
(86) Internationale Anmeldenummer: EP9706742
(87) Internationale Veröffentlichungsnummer: WO98025939

(56) Entgegenhaltungen:
- WO-A-96/01690
- GB-A- 854 182
- US-A- 3 253 033
- US-A- 3 496 231
- ASKER K A ET AL: "Some dinuclear and trinuclear platinum(II) complexes of bis(diphenylphosphinomethyl)phenylphosphin e. A novel fluxional process for cis-[bis{bis(diphenylphosphinomethyl)pheny lphosphine}dich loroplatinum(II)}dichloroplatinum(II)], cis-[PtCl2{(.mu.-dpmp)PtCl2}2]" NEW J. CHEM. (NJCHE5,03989836);89; VOL.13 (8-9); PP.587-94, UNIV. SUSSEX;SCH. CHEM. MOL. SCI.; FALMER/BRIGHTON; BN1 9QJ; UK (GB), XP002059155
- OLMSTEAD M M ET AL: "Bis(diphenylphosphinomethyl)phenylphosphi ne as a chelating and bridging ligand. The preparations and molecular structures of palladium complexes" INORG. CHIM. ACTA (ICHAA3,00201693);83; VOL.75 (2); PP.199-208, UNIV. CALIFORNIA;DEP. CHEM.; DAVIS; 95616; CA; USA (US), XP002059156
- GUIMERANS R R ET AL: "Characterization of chelating bis[(diphenylphosphino)methyl]phenylp hosphine as a bridging ligand in bi- and trinuclear complexes" INORG. CHEM. (INOCAJ,00201669);83; VOL.22 (16); PP.2223-4, UNIV. CALIFORNIA;DEP. CHEM.; DAVIS; 95616; CA; USA (US), XP002059157
- BALCH A L ET AL: "Preparation and structural characterization of rhodium and palladium complexes of mixed phosphine/amine ligands with methylene spacers between donor atoms" INORG. CHIM. ACTA (ICHAA3,00201693);90; VOL.168 (2); PP.255-64, UNIV. CALIFORNIA;DEP. CHEM.; DAVIS; 95616; CA; USA (US), XP002059158
- G. N. NIKONOV: "Reactions of boryloxymethyl- and hydroxymethylphosphines with amines" BULLETIN OF THE ACADEMY OF SCIENCES OF THE USSR. DIVISION OF CHEMICAL SCIENCE., Bd. 6, 1989, NEW YORK US, Seiten 1340-1343, XP002059159
- R. K. VALETDINOV: "Reactions of alkylbis(2-hydroxyalkyl)-phosphines with dialkylamines" JOURNAL OF GENERAL CHEMISTRY USSR., Bd. 46, Nr. 2, 1976, NEW YORK US, Seiten 272-274, XP002059160
- Z. N. MIRONOVA: "Synthesis from tetrakishydroxymethylphosphonium chloride" JOURNAL OF GENERAL CHEMISTRY USSR., Bd. 42, Nr. 10, 1972, NEW YORK US, Seiten 2149-2154, XP002059161
- K. KELLNER: "Organoarsen-Verbindungen XXXIII" JOURNAL OF ORGANOMETALLIC CHEMISTRY., Bd. 149, 1978, LAUSANNE CH, Seiten 167-176, XP002059162
- K.P. LANGHANS: "Synthese von Ph2P-CH2-PH2 und (Ph2P-CH2)2PH durch Phosphinomethylierung von PH3 unter Phasentransferkatalyse" CHEMISCHE BERICHTE., Bd. 123, 1990, WEINHEIM DE, Seiten 995-999, XP002059163
- SIBBELE HIETKAMP: "Triphosphaalkanes R2P-CH2-PR-CH2-PR2 (R=Cl,CH3)" ANGEWANDTE CHEMIE. INTERNATIONAL EDITION., Bd. 21, Nr. 5, 1982, WEINHEIM DE, Seiten 376-377, XP002059164
- J. KRILL: "Bis((di-tert-butylphosphanyl)methyl)methy lphosphan" CHEMISCHE BERICHTE., Bd. 126, 1993, WEINHEIM DE, Seiten 2379-2382, XP000645303
- SERINDAG O ET AL: "Synthesis of sulfonated aminomethylphosphines and some nickel(II), palladium(II), platinum(II) and rhodium(I) complexes. Crystal structure of [Et3NH][(Ph2PCH2)2N(CH2)2SO3]" TRANSITION MET. CHEM. (LONDON) (TMCHDN,03404285);95; VOL.20 (6); PP.548-51, UNIVERSITY OF LEICESTER;INORGANIC RESEARCH LABORATORIES; LEICESTER; LE1 7RH; UK (GB), XP002059165
- FAWCETT J ET AL: "Zerovalent palladium and platinum complexes of aminomethylphosphines. Crystal structure of the palladium(0) dibenzylideneacetone complex [Pd(PhCH:CHCOCH:CHPh){((C6H11)2PCH2)2NMe}] " J. ORGANOMET. CHEM. (JORCAI,0022328X);95; VOL.486 (1-2); PP.171-6, DEPARTMENT OF CHEMISTRY, THE UNIVERSITY OF LEICESTER;LEICESTER; LE1 7RH; UK (GB), XP004024364

## Beschreibung

Die vorliegende Erfindung betrifft cis-verbrückte Metallkomplexe der allgemeinen Formel (I) 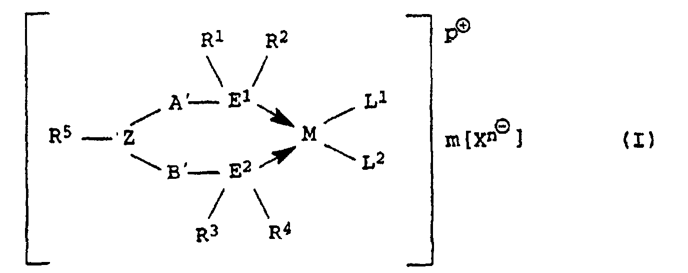 in welcher die Substituenten und Indizes die folgende Bedeutung haben:
- R⁵: Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 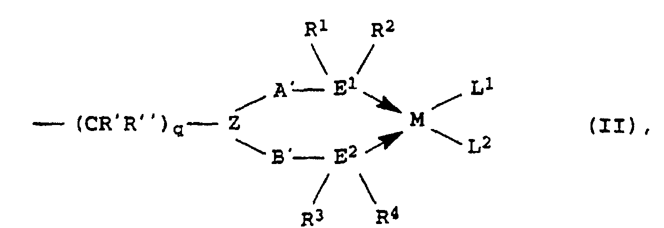 in der
q eine ganze Zahl von 0 bis 20 bedeutet und
R', R" Wasserstoff oder Substituenten, ausgewählt aus der Gruppe bestehend aus C₁- bis C₂₀-kohlenstofforganischen und C₃- bis C₃₀-siliciumorganischen Resten, darstellen und die weiteren Substituenten in (II) wie in (I) die nachfolgende Bedeutung haben,
- M: ein Metall aus der Gruppe VIIIB des Periodensystems der Elemente,
- E¹, E²: ein Element aus der Gruppe VA des Periodensystems der Elemente,
- Z: ein Element aus der Gruppe VA des Periodensystems der Elemente,
- R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
- A', B': C₁-C₄-Alkyleneinheiten in substituierter und unsubstituierter Form, silylenverbrückte organische Reste sowie NR⁸-Reste,
- R⁶ bis R⁸: Wasserstoff oder Substituenten, ausgewählt aus der Gruppe bestehend aus C₁- bis C₂₀-kohlenstofforganischen und C₃- bis C₃₀-siliciumorganischen Resten,
- L¹,L²: neutrale Liganden,
- X: formal ein- oder mehrwertige Anionen,
- p: 0, 1, 2, 3 oder 4,
- m, n: 0, 1, 2, 3 oder 4,
- wobei: p = m x n.
Weiterhin betrifft die vorliegende Erfindung cis-verbrückte Metallkomplexe der allgemeinen Formel (I), in welcher die Substituenten und Indizes die folgende Bedeutung haben:
- R⁵: Wasserstoff, aliphatische Reste, wie Methyl, Ethyl, i-Propyl oder t-Butyl, cycloaliphatische Reste, wie Cyclopentyl oder Cyclohexyl, aromatische Reste, wie Phenyl, o-Methoxyphenyl oder 4-Hydroxyphenyl, Substituenten mit anionischen Gruppen, wie -(CH₂)ₙ-SO₃⁻, Substituenten mit kationischen Gruppen, wie -(CH₂)ₙ-NR₃⁺ oder Hydroxy- oder Aminogruppen enthaltende Substituenten, wie -(CH₂)ₙ-OH bzw. -(CH₂)ₙ-NR₂ (n = 1 bis 30), Reste der allgemeinen Formel (II) 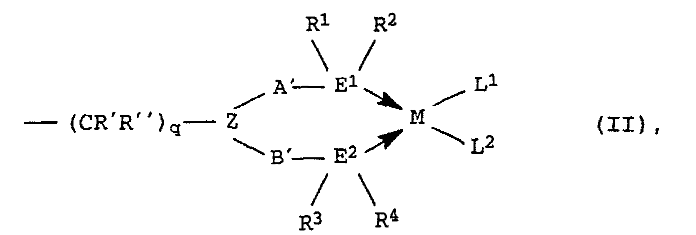 in der
q eine ganze Zahl von 0 bis 20 bedeutet und
R', R" unabhängig voneinander Wasserstoff oder C₁- bis C₁₀-Alkyl, geradkettig oder verzweigt, wie Methyl, Ethyl, i-Propyl, n-Propyl, C₃-bis C₁₀-Cycloalkyl wie Cyclopropyl, Cyclopentyl, Cyclohexyl, C₆- bis C₁₄-Aryl, wie Phenyl, bedeuten und die weiteren Substituenten in (II) wie in (I) die nachfolgende Bedeutung haben,
- M: Palladium oder Nickel,
- E¹, E²: Stickstoff oder Phosphor,
- Z: Stickstoff,
- R¹ bis R⁴: cycloaliphatische Reste, wie Cyclohexyl oder Menthyl, verzweigte aliphatische Reste, wie i-Propyl, s-Butyl oder t-Butyl, aromatische Reste, wie Phenyl, o-Methoxyphenyl oder p-Trifluormethylphenyl und heteroaromatische Reste, wie Pyridyl,
- A', B': Methylen oder Ethylen in substituierter und unsubstituierter Form, beispielsweise Ethyliden oder Propyliden, Benzyliden, o-Phenylen,
- L¹, L²: Hydride, Sulfate, Phosphate, Nitrate, Acetonitril, Methanol, Acetylaceton, Tetrahydrofuran, Acetat, Trifluoracetat, Tosylat, Wasser,
- X: Tetrafluoroborat, Hexafluorophosphat, Hexafluoroantimonat, Pentafluorbenzoat, Trifluormethansulfonat, Trifluoracetat, Perchlorat, p-Toluolsulfonat, Tetraarylborate,
- p: 0, 1, 2, 3 oder 4,
- m, n: 0, 1, 2, 3 oder 4,
- wobei: p = m x n.
Darüber hinaus betrifft die vorliegende Erfindung cis-verbrückte Metallkomplexe der allgemeinen Formel (I) in welcher die Substituenten und Indizes die folgende Bedeutung haben:
- R⁵: Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten,
- M: ein Metall aus der Gruppe VIIIB des Periodensystems der Elemente,
- E¹, E²: ein Element aus der Gruppe VA des Periodensystems der Elemente,
- Z: ein Element aus der Gruppe VA des Periodensystems der Elemente,
- R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
- A', B': C₁-C₄-Alkyleneinheiten in substituierter und unsubstituierter Form, silylenverbrückte organische Reste sowie NR⁸-Reste,
- R⁶ bis R⁸: Wasserstoff oder Substituenten, ausgewählt aus der Gruppe bestehend aus C₁- bis C₂₀-kohlenstofforganischen und C₃- bis C₃₀-siliciumorganischen Resten,
- X: formal ein- oder mehrwertige Anionen,
- p: 0, 1, 2, 3 oder 4,
- m, n: 0, 1, 2, 3 oder 4,
- wobei: p = m x n; und
- L¹, L²: formal geladene oder neutrale Liganden bedeuten, wobei L¹ oder L², nicht jedoch L¹ und L² gleichzeitig, ein Halogenid darstellen.
Die vorliegende Erfindung betrifft auch cis-verbrückte Metallkomplexe der allgemeinen Formel (I), in welcher die Substituenten und Indizes die folgende Bedeutung haben:
- R⁵: Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 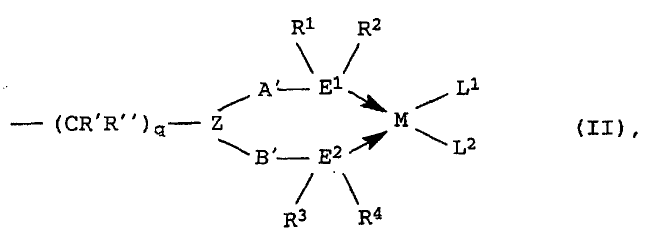 in der
q eine ganze Zahl von 0 bis 20 bedeutet und
R', R" Wasserstoff oder Substituenten, ausgewählt aus der Gruppe bestehend aus C₁- bis C₂₀-kohlenstofforganischen und C₃- bis C₃₀-siliciumorganischen Resten, darstellen und die weiteren Stubstituenten in (II) wie in (I) die nachfolgende Bedeutung haben,
- M: ein Metall aus der Gruppe VIIIB des Periodensystems der Elemente,
- E¹, E²: ein Element aus der Gruppe VA des Periodensystems der Elemente,
- Z: ein Element aus der Gruppe VA des Periodensystems der Elemente,
- R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
- A', B': C₁-C₄-Alkyleneinheiten in substituierter und unsubstituierter Form, silylenverbrückte organische Reste sowie NR⁸-Reste,
- R⁶ bis R⁸: Wasserstoff oder Substituenten, ausgewählt aus der Gruppe bestehend aus C₁- bis C₂₀-kohlenstofforganischen und C₃- bis C₃₀-siliciumorganischen Resten,
- L¹,L²: C₁- bis C₂₀-Carboxylate, organische Sulfonate, Nitrile, Ketone, Ether, Alkohole, Wasser, C₁- bis C₂₀-aliphatische, C₅- bis C₃₀-cycloaliphatische, C₇- bis C₂₀-Aralkylreste mit C₆- bis C₁₄-Aryl- und C₁- bis C₆-Alkylresten sowie C₆- bis C₂₀-aromatische Reste,
- X: formal ein- oder mehrwertige Anionen,
- p: 0, 1, 2, 3 oder 4,
- m, n: 0, 1, 2, 3 oder 4,
- wobei: p = m x n.
Weiterhin betrifft die vorliegende Erfindung die Verwendung solcher Metallkomplexe als Katalysatoren oder als wesentliche Bestandteile von Katalysatorsystemen zur Copolymerisation von Kohlenmonoxid mit olefinisch ungesättigten Verbindungen.

Die erfindungsgemäßen Metallkomplexe der allgemeinen Formel (I) sind u.a. erhältlich aus Chelatliganden der allgemeinen Formel (III) 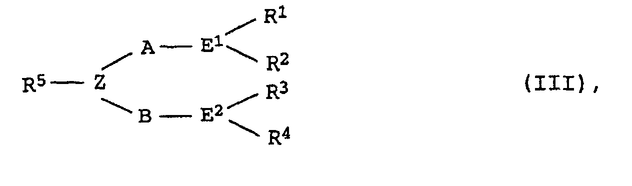 in der die Substituenten und Indizes die folgende Bedeutung haben:
- R⁵: Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel (IV) 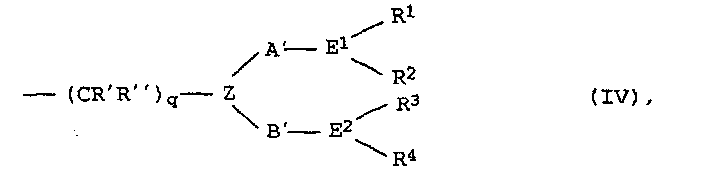 in der
q eine ganze Zahl von 0 bis 20 bedeutet und
R', R" Wasserstoff oder Substituenten, ausgewählt aus der Gruppe bestehend aus C₁- bis C₂₀-kohlenstofforganischen und C₃- bis C₃₀-siliciumorganischen Resten, darstellen und die weiteren Stubstituenten in (II) wie in (I) die nachfolgende Bedeutung haben,
- Z: Stickstoff oder Phosphor,
- E¹, E²: Stickstoff oder Phosphor,
- R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
- A', B': C₁-C₄-Alkyleneinheiten in substituierter und unsubstituierter Form, silylenverbrückte organische Reste sowie NR⁸-Reste,
- R⁶ bis R⁸: Wasserstoff oder Substituenten, ausgewählt aus der Gruppe bestehend aus C₁- bis C₂₀-kohlenstofforganischen und C₃- bis C₃₀-siliciumorganischen Resten.

Metallkomplexe mit bidentaten Chelatliganden sind in der chemischen Synthese aus einer Vielzahl von Anwendungen bekannt. Beispielsweise gelingt die stereoselektive Hydrierung von Alkenen mit cis-verbrückten Bisphosphinkomplexen des Rhodiums, wie 1,1'-Binaphthyldiphosphin-Rhodium (B. Bosnich, M.D. Fryzuk, Top. Stereochem. 1981, 12, S. 119 ff; W.S. Knowles, Acc. Chem. Res. 1983, 16, S. 106 ff) sowie die asymmetrische Reduktion von α-N-Acylaminoacrylsäure unter Verwendung von mit 2,3-O-Isopropyliden-2,3-dihydroxy-1,4-bis(diphenylphosphino)butan (H.B. Kagan, T.-P. Dang, J. Am. Chem. Soc. 1972, 94, S. 6429 ff) oder mit 1,2-Ethandiylbis(o-methoxyphenyl)phenylphosphin komplexiertem Rhodium (B.D. Vineyard, W.S. Knowles, M.J. Sabacky, G.L. Bachman, D.J. Weinkauff, J. Am. Chem. Soc. 1977, 99, S. 5946 ff). Bei der asymmetrischen Epoxidierung von Allylalkoholen ist ein bidentater Titantartratkomplex die aktive Spezies (vgl. A. Pfenninger, Synthesis 1986, S. 89 ff). Auch in der Polymersynthese, z.B. bei der Copolymerisation von Kohlenmonoxid mit Ethylen, haben Chelatliganden als Bestandteil von Katalysatorsystemen ihre Wirksamkeit unter Beweis gestellt (vgl. EP-A 0 121 965).

Über die geeignete Wahl der Liganden am Metall wird versucht, die sterischen und elektronischen Bedingungen derart einzustellen, daß daraus eine optimierte katalytische Aktivität des Metallzentrums resultiert. Da sich die sterischen und elektronischen Eigenschaften von Metallkomplexen im allgemeinen über die Wahl des bidentaten Liganden maßgeblich beeinflussen lassen, ist man bestrebt, durch Modifizierung der Liganden optimierte Reaktionsparameter zu erhalten. Allerdings handelt es sich bei Chelatliganden üblicherweise um sehr komplex aufgebaute Verbindungen, die die unterschiedlichsten Funktionalitäten enthalten können, weshalb deren Synthese aufwendig und kostenintensiv ist. Zudem sind Strukturanaloga, selbst wenn sie nur geringfügig von einer bekannten Chelatverbindung abweichen, häufig nicht auf ähnlichem Wege zugänglich, sondern erfordern eine aufwendige, eigenständige Synthese.

Es ist daher wünschenswert, ausgehend von leicht zugänglichen, kostengünstigen Synthesegrundkörpern zu einer Vielzahl von Chelatligandvarianten zu gelangen, d.h. die zugrundeliegende Synthesevorschrift sollte eine weitgehende Flexibilität im Hinblick auf das Zielmolekül gestatten, gleichzeitig jedoch mit relativ einfachen, wenigen Verfahrensschritten auskommen.

Der vorliegenden Erfindung lag demgemäß die Aufgabe zugrunde, cis-verbrückte Metallkomplexe, die insbesondere für die Copolymerisation von Kohlenmonoxid mit olefinisch ungesättigten Verbindungen geeignet sind, auf sehr einfache Art und Weise zugänglich zu machen, wobei das Grundmuster des verwendeten Chelatliganden unproblematisch in seinen jeweiligen Bestandteilen variiert werden kann. Der vorliegenden Erfindung lag weiter die Aufgabe zugrunde, bidentate Chelatliganden in großtechnischen Mengen kosteneffizient zur Verfügung zu stellen, die in ihrem Grundmuster leicht zu variieren sind, ohne daß dadurch der synthetische Zugang erschwert wird.

Demgemäß wurden die eingangs definierten Metallkomplexe gefunden.

Außerdem wurde ein Verfahren zur Herstellung der eingangs definierten Metallkomplexe sowie die Verwendung der definierten Metallkomplexe (I) als Katalysatoren oder als wesentliche Bestandteile von Katalysatorsystemen zur Copolymerisation von Kohlenmonoxid mit olefinisch ungesättigten Verbindungen gefunden.

Weiterhin wurden die eingangs definierten Chelatliganden (III) sowie deren Verwendung zur Herstellung von Metallkomplexen (I) gefunden.

Von den Metallkomplexen der allgemeinen Formel (I) sind diejenigen bevorzugt, in denen die Substituenten folgende Bedeutung haben:
- R⁵: Wasserstoff, aliphatische Reste, wie Methyl, Ethyl, i-Propyl oder t-Butyl, cycloaliphatische Reste, wie Cyclopentyl oder Cyclohexyl, aromatische Reste, wie Phenyl, o-Methoxyphenyl oder 4-Hydroxyphenyl, Substituenten mit anionischen Gruppen, wie -(CH₂)ₙ-SO₃⁻, Substituenten mit kationischen Gruppen, wie -(CH₂)ₙ-NR₃⁺ oder Hydroxy- oder Aminogruppen enthaltende Substituenten, wie -(CH₂)ₙ-OH bzw. -(CH₂)ₙ-NR₂ (n = 1 bis 30), Reste der allgemeinen Formel (II) 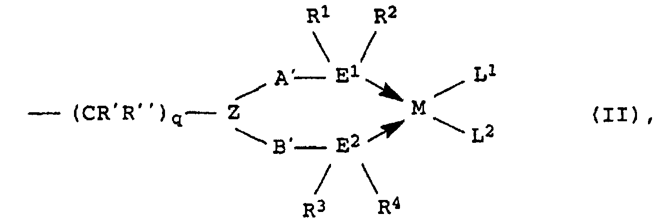 in der
q eine ganze Zahl von 0 bis 20 bedeutet und
R', R" unabhängig voneinander Wasserstoff oder C₁- bis C₁₀-Alkyl, geradkettig oder verzweigt, wie Methyl, Ethyl, i-Propyl, n-Propyl, C₃-bis C₁₀-Cycloalkyl wie Cyclopropyl, Cyclopentyl, Cyclohexyl, C₆- bis C₁₄-Aryl, wie Phenyl, bedeuten und die weiteren Substituenten in (II) wie in (I) die nachfolgende Bedeutung haben,
- M: Palladium oder Nickel,
- E¹, E²: Stickstoff oder Phosphor,
- Z: Stickstoff,
- R¹ bis R⁴: cycloaliphatische Reste, wie Cyclohexyl oder Menthyl, verzweigte aliphatische Reste, wie i-Propyl, s-Butyl oder t-Butyl, aromatische Reste, wie Phenyl, o-Methoxyphenyl oder p-Trifluormethylphenyl und heteroaromatische Reste, wie Pyridyl,
- A', B': Methylen oder Ethylen in substituierter und unsubstituierter Form, beispielsweise Ethyliden oder Propyliden, Benzyliden, o-Phenylen,
- L¹, L²: Hydride, Sulfate, Phosphate, Nitrate, Acetonitril, Methanol, Acetylaceton, Tetrahydrofuran, Acetat, Trifluoracetat, Tosylat, Wasser,
- X: Tetrafluoroborat, Hexafluorophosphat, Hexafluoroantimonat, Pentafluorbenzoat, Trifluormethansulfonat, Trifluoracetat, Perchlorat, p-Toluolsulfonat, Tetraarylborate.

In einer weiteren, bevorzugten Ausführungsform des Metallkomplexes (I) stellen für den Fall, daß R⁵ ≠ (II) ist, entweder L¹ oder L², nicht jedoch L¹ und L² gleichzeitig, ein Halogenid, vorzugsweise Chlorid, dar.

Beispiele für besonders bevorzugte Metallkomplexe sind
(Bis(diphenylphosphinomethyl)phenylamin-palladium-bis-acetonitril)bis(perchlorat),
(Bis (diphenylphosphinomethyl)phenylamin-palladium-bis-acetonitril)bis(tetrafluoroborat),
(Bis (diphenylphosphinomethyl)phenylamin-palladium-bis-acetonitril)bis(trifluoracetat),
(Bis(diphenylphosphinomethyl)-t-butylamin-palladium-bis-acetonitril)bis(perchlorat),
(Bis(diphenylphosphinomethyl)-t-butylamin-palladium-bis-acetonitril)bis(tetrafluoroborat),
(Bis(diphenylphosphinomethyl)-t-butylamin-palladium-bis-acetonitril)bis(trifluoracetat),
Bis(diphenylphosphinomethyl)phenylamin-palladium-bis-acetat und
Bis(diphenylphosphinomethyl)-1-butylamin-palladium-bis-acetat sowie
(Bis(diphenylphosphinomethyl)phenylamin-palladium-chlorid-acetonitril)(perchlorat),
(Bis(diphenylphosphinomethyl)phenylamin-palladium-chlorid-acetonitril)(tetrafluoroborat),
(Bis(diphenylphosphinomethyl)phenylamin-palladium-chlorid-acetonitril)(trifluoracetat),
(Bis(diphenylphosphinomethyl)-t-butylamin-palladium-chlorid-acetonitril)(perchlorat),
(Bis(diphenylphosphinomethyl)-t-butylamin-palladium-chlorid-acetonitril)(tetrafluoroborat),
(Bis(diphenylphosphinomethyl)-t-butylamin-palladium-chlorid-acetonitril) (trifluoracetat),
Bis(diphenylphosphinomethyl)phenylamin-palladium-chlorid-acetat und
Bis(diphenylphosphinomethyl)-t-butylamin-palladium-chlorid-acetat.

Als Metalle M der erfindungsgemäßen Metallkomplexe eignen sich die Metalle der Gruppe VIIIB des Periodensystems der Elemente, also neben Eisen, Cobalt und Nickel vornehmlich die Platinmetalle wie Ruthenium, Rhodium, Osmium, Iridium und Platin sowie ganz besonders Palladium. Die Metalle können in den Komplexen formal ungeladen, formal einfach positiv geladen oder vorzugsweise formal zweifach positiv geladen vorliegen.

Als Elemente E¹ und E² der Chelatliganden (III) kommen die Elemente der V. Hauptgruppe des Periodensystems der Elemente (Gruppe VA), also Stickstoff, Phosphor, Arsen, Antimon oder Bismut in Betracht. Besonders geeignet sind Stickstoff oder Phosphor, insbesondere Phosphor. Die Chelatliganden können unterschiedliche Elemente E¹ und E² enthalten, so zum Beispiel Stickstoff und Phosphor.

Die verbrückende Struktureinheit in den erfindungsgemäßen Metallkomplexen setzt sich aus den Komponenten A', B' und Z (s.a. Formeln (I) und (III)) zusammen. Unter einer verbrückenden Struktureinheit wird grundsätzlich eine mehratomige Gruppierung verstanden, die die Elemente E¹ und E² miteinander verbindet.

Die Komponente Z wird jeweils aus einem Element der V. Hauptgruppe des Periodensystems der Elemente, also Stickstoff, Phosphor, Arsen, Antimon oder Bismut gebildet. Vorzugsweise werden Stickstoff und Phosphor, insbesondere aber Stickstoff eingesetzt.

Die Einheiten A' und B' können jeweils unabhängig voneinander C₁- bis C₄-kohlenstofforganische sowie siliciumorganische Reste sein. Als kohlenstofforganische Reste sind C₁- bis C₄-Alkyleneinheiten in substituierter und unsubstituierter Form geeignet, zum Beispiel Methylen, Ethylen, Propylen sowie Ethyliden, Propyliden und Benzyliden. Bevorzugt werden Methylen, Ethylen, Ethyliden und Benzyliden, besonders bevorzugt Methylen, eingesetzt.

Des weiteren können A' und B', ebenfalls unabhängig voneinander, Silylenreste bedeuten, beispielsweise -R^{a}Si-R^{b}-, mit R^{a}, R^{b} als C₁- bis C₄-Alkyleneinheiten in substituierter und unsubstituierter Form, wie Methylen, Ethylen oder Ethyliden, Aryleneinheiten, insbesondere o-Phenylen, oder Aralkylideneinheiten, insbesondere Benzyliden, wobei die freien Valenzen am Silicium mit Alkylgruppen, wie Methyl, -i-Propyl oder t-Butyl, Arylgruppen, wie Phenyl, oder Aralkylgruppen, wie Benzyl, abgesättigt sein können.

A' und B' können auch eine -NR⁸-Einheit darstellen, in der -R⁸ Wasserstoff oder einen Substituenten, ausgewählt aus der Gruppe bestehend aus C₁- bis C₂₀-kohlenstofforganischen und C₃- bis C₃₀-siliciumorganischen Resten bedeutet, wie C₁- bis C₁₀-Alkyl, insbesondere Methyl, Ethyl, Aryl, insbesondere Phenyl oder Aralkyl, insbesondere Benzyl.

A' und B' können ebenfalls ein ein-, zwei-, drei- oder vieratomiger Bestandteil eines aliphatischen oder aromatischen Ringsystems sein. Zum Beispiel können A' und B' eine Methylen- oder Ethyleneinheit eines Cyclopropyl-, Cyclopentyl- oder Cyclohexylrings darstellen. Als Ringsysteme kommen auch aliphatische und aromatische Heterocyclen in Betracht.

A' und B' können des weiteren Bestandteil eines Heterocyclus sein, der aus den Komponenten A'-Z-R⁵ bzw. B'-Z-R⁵ gebildet wird, d.h. A'-Z-R⁵ bzw. B'-Z-R⁵ können z.B. einen substituierten oder unsubstituierten Pyrrolidin- oder Piperidinring ausbilden.

Für den Fall einer einatomigen kohlenstofforganischen Verbrückung zwischen den Einheiten Z und E¹ bzw. E² stellen A' und B', unabhängig voneinander, bevorzugt eine -CR⁹R¹⁰-Einheit dar, worin R⁹ und R¹⁰, ebenfalls unabhängig voneinander, Wasserstoff, C₁- bis C₁₀-Alkyl, wie Methyl, Ethyl oder Propyl, C₆- bis C₁₄-Aryl, beispielsweise Phenyl, C₇- bis C₂₀-Aralkyl oder Heteroaryl bedeuten können. Des weiteren kann die einatomige Verbrückung mit den Resten R⁹ und R¹⁰ ein Ringsystem, wie Cyclopropyl, Cyclopentyl oder Cyclohexyl ausbilden.

Als kohlenstofforganische Reste R¹ bis R⁴ kommen, unabhängig voneinander, z.B. aliphatische und cycloaliphatische sowie aromatische und heteroaromatische mit 1 bis 20 C-Atomen in Betracht.

Als geradkettige aliphatische Reste sind u.a. geeignet Methyl, Ethyl, Propyl, Butyl, Pentyl, Hexyl und Octyl.

Als verzweigte aliphatische Reste eignen sich C₃- bis C₂₀-, vorzugsweise C₃- bis C₁₂-Alkylreste, wie die i-Propyl-, i-Butyl-, s-Butyl-, Neopentyl- und t-Butylgruppe, weiterhin Alkylaryl mit jeweils 1 bis 6 C-Atomen im Alkylrest und 6 bis 14 C-Atomen im Arylrest.

Besonders geeignete verzweigte aliphatische Reste sind die t-Butylgruppe, die i-Propylgruppe und die s-Butylgruppe.

Auch Alkylgruppen mit weiter außen liegender Verzweigung sind als Substituenten R¹ bis R⁴ gut geeignet, wie die i-Butyl-, die 3-Methyl-but-2-yl- und 4-Methylpentylgruppe.

Als cycloaliphatische Reste kommen z.B. C₃- bis C₁₀-monocyclische wie beispielsweise die Cyclopropyl-, Cyclobutyl-, Cyclopentyl-, Cyclohexyl und Menthylgruppen sowie bicyclische Reste wie die Norbornyl-, Pinanyl-, Bornylgruppe und Bicyclononylgruppe in beliebiger Verknüpfung des Ringgerüstes mit den Atomen E¹ und E² in Betracht. Vorzugsweise enthalten die cycloaliphatischen Reste insgesamt 5 bis 20 C-Atome, ganz besonders bevorzugt sind Cyclohexyl und Menthyl.

Ferner sind lineare Arylalkylgruppen mit jeweils 1 bis 6 C-Atomen im Alkylrest und 6 bis 14 C-Atomen im Arylrest geeignet, wie beispielsweise Benzyl.

Als Arylreste kommen aromatische Systeme mit 6 bis 20 C-Atomen in substituierter und unsubstituierter Form in Frage, beispielsweise Phenyl, Tolyl, Xylyl, Trifluormethylphenyl oder Anisyl, bevorzugt werden Phenyl und o-Methoxyphenyl eingesetzt.

Als Heteroarylreste sind ganz allgemein C₃- bis C₂₀-Verbindungen geeignet, die vorzugsweise 1 bis 3 Stickstoffatome pro Ring enthalten, z.B. Pyridyl, Pyrimidyl, Pyrazinyl oder Triazinyl sowie mit Alkyl- oder Arylgruppen versehenes Heteroaryl.

Die Reste R¹ bis R⁴ können auch Atome aus der Gruppe IVA, VA, VIA oder VIIA des Periodensystems der Elemente enthalten, wie zum Beispiel Halogen, Sauerstoff, Schwefel, Stickstoff, Silicium, hier beispielsweise die Bis(trimethylsilyl)methylgruppe. Auch funktionelle Gruppen wie zum Beispiel Hydroxy, Alkoxy, Amino und Cyan, die sich unter den Polymerisationsbedingungen inert verhalten, kommen in diesem Zusammenhang in Betracht.

Bevorzugte Heterosubstituenten R¹ bis R⁴ sind C₃- bis C₃₀siliciumorganische Reste, das heißt tetravalente Siliciumatoroe die einerseits an E¹ oder E² gebunden sind und deren übrige Valenzen mit drei kohlenstofforganischen Resten abgesättigt sind, wobei die Summe der Kohlenstoffatome dieser drei an Silicium gebundenen Reste im Bereich von drei bis dreißig liegt. Beispielsweise seien genannt die Trimethylsilyl-, t-Butyldimethylsilyloder Triphenylsilylgruppe, insbesondere die Trimethylsilylgruppe.

Die Reste R¹ bis R⁴ sollten vorzugsweise soweit raumerfüllend sein, daß das Zentralatom, z.B. das Palladiumatom, mit dem die Atome E¹ und E² den aktiven Komplex bilden, weithin abgeschirmt wird. Reste, welche dieser Forderung genügen, sind beispielsweise cycloaliphatische Reste sowie verzweigte aliphatische Reste, darunter besonders solche mit Verzweigung in α-Position.

Die Reste R¹ bis R⁴ in einer Metallkomplexverbindung (I) können sowohl identisch vorliegen als auch nur paarweise übereinstimmen oder vollständig voneinander verschieden sein, d.h. R¹ ≠ R² ≠ R³ ≠ R⁴.

Geeignete formal geladene anorganische Liganden L¹, L² sind Hydrid, Halogenide, Sulfate, Phosphate oder Nitrate.

Vorzugsweise verwendet man Halogenide wie Chloride, Bromide, Iodide und insbesondere Chloride.

In einer bevorzugten Ausführungsform liegt in dem Metallkomplex (I) einer der Liganden L¹ und L² als Halogenid vor.

Des weiteren können L¹ und L² Carboxylate, wie Acetat, Trifluoracetat, Propionat, Oxalat, Citrat oder Benzoat, insbesondere Acetat, sein.

Geeignete formal geladene organische Liganden L¹, L² sind C₁- bis C₂₀-aliphatische, C₃- bis C₃₀-cycloaliphatische, C₇- bis C₂₀-Aralkylreste mit C6- bis C₁₄-Arylresten und C₁- bis C₆-Alkylresten sowie C₆- bis C₂₀-aromatische Reste, beispielsweise Methyl, Ethyl Propyl, i-Propyl, t-Butyl, n-, i-Pentyl, Cyclohexyl, Benzyl, Phenyl und aliphatisch oder aromatisch substituierte Phenylreste.

Weiterhin eignen sich als formal geladene organische Liganden C₁- bis C₂₀-Carboxylate wie beispielsweise Acetat, Propionat, Oxalat, Benzoat, Citrat sowie Salze von organischen Sulfonsäuren wie Methylsulfonat, Trifluormethylsulfonat, p-Toluolsulfonat. Vorzugsweise verwendet man C₁- bis C₇-Carboxylate, Sulfonsäurederivate und insbesondere Acetat und p-Toluolsulfonat.

Als formal ungeladene Liganden L¹, L² sind generell Lewisbasen ge eignet, also Verbindungen mit mindestens einem freien Elektronenpaar. Besonders gut geeignet sind Lewisbasen deren freies Elektronenpaar oder deren freie Elektronenpaare sich an einem Stickstoff- oder Sauerstoffatom befinden, also beispielsweise Nitrile, R-CN, Ketone, Ether, Alkohole oder Wasser. Vorzugsweise verwendet man C₁- bis C₁₀-Nitrile wie Acetonitril, Propionitril, Benzonitril oder C₂- bis C₁₀-Ketone wie Aceton, Acetylaceton oder aber C₂- bis C₁₀-Ether, wie Dimethylether, Diethylether, Tetrahydrofuran. Insbesondere verwendet man Acetonitril oder Tetrahydrofuran.

Grundsätzlich können die Liganden L¹ und L² in jeder beliebigen Ligandkombination vorliegen, d.h. der Metallkomplex (I) kann zum Beispiel einen Nitrat- und einen formal geladenen organischen Liganden, wie t-Butyl, oder einen Acetonitril- und einen Halogenidliganden enthalten.

Je nach formaler Ladung des das Metall M enthaltenden Komplexfragments enthalten die Metallkomplexe Anionen X. Ist das M-enthaltende Komplexfragment formal ungeladen, so enthält der erfindungsgemäße Komplex (I) jedoch kein Anion X. Vorteilhafterweise werden Anionen X eingesetzt, die möglichst wenig nucleophil sind, d.h. eine möglichst geringe Tendenz haben, mit dem Zentralmetall M eine chemische Bindung einzugehen.

Als Substituenten R⁵ sind zum Beispiel geeignet Wasserstoff sowie Substituenten, ausgewählt aus der Gruppe bestehend aus C₁- bis C₂₀-kohlenstofforganischen und C₃- bis C₃₀-siliciumorganischen Resten in substituierter und unsubstituierter Form. Unter die genannten kohlenstofforganischen Reste fallen u.a. geradkettige und verzweigte C₁- bis C₂₀- aliphatische Einheiten, wie Methyl, Ethyl, n-Propyl, i-Propyl, n-Butyl, i-Butyl, s-Butyl, t-Butyl sowie Pentyl, Hexyl, Octyl und deren Strukturanaloga, cycloaliphatische Einheiten, beispielsweise C₃- bis C₁₀-Monocyclen, wie Cyclopropyl, Cyclopentyl und Cyclohexyl, oder Bicyclen, wie Norbonyl, sowie C₆- bis C₂₀-Arylgruppen, die einfach oder mehrfach mit Alkyl-, Aryloder funktionellen Gruppen auf der Basis des Periodensystems der Elemente, wie Silyl, Amino, Alkoxy, Halogen, substituiert sein können. Des weiteren kann R⁵ eine Aralkylgruppe, wie Benzyl, oder eine Heteroarylgruppe, wie Pyridyl oder Pyrimidyl, sein.

Außerdem stellt R⁵ z.B. eine eine funktionalisierte Endgruppe enthaltende C₁- bis C₂₀-Alkylenkette in substituierter und unsubstituierter Form dar, die gegebenenfalls auch Heteroatome, wie Sauerstoff oder Stickstoff, oder Aryleneinheiten, wie Phenylen, in der Alkylenkette enthalten kann. Bevorzugt ist eine Alkylengruppe -(CH₂)ₙ-Q, worin Q -SO₃^{⊖}, -CO₂^{⊖}, -CO₂R, -CONR₂, Halogen, insbesondere F, Cl, Br, I, Hydroxy, -OR, Tosyl, -NR₂ oder -MR₃^{⊕} bedeuten und n = 1-30 ist. R steht ganz allgemein für einen Aryl- oder Alkylrest oder für Wasserstoff.

Weiterhin kann R⁵ -NR⁶R⁷ bedeuten, worin R⁶ und R⁷, unabhängig voneinander, Substituenten, ausgewählt aus der Gruppe bestehend aus C₁- bis C₂₀-kohlenstofforganischen und C₃- bis C₃₀-siliciumorganischen Resten darstellen und wobei letztgenannte Reste die vorgehend unter R⁵ aufgeführten Substituenten einnehmen können. Bevorzugt stellen R⁶, R⁷ Methyl, Ethyl, i-Propyl, Phenyl oder Benzyl dar.

Als Heterosubstituenten R⁵ kommen auch C₃- bis C₃₀-siliciumorganische Reste in Frage, wobei die Summe der Kohlenstoffatome der drei an das Siliciumatom gebundenen kohlenstofforganischen Reste im Bereich von 3 bis 30 liegt. Beispielsweise seien genannt die Trimethylsilyl-, t-Butyldimethylsilyl- und die Triphenylsilylgruppe.

Des weiteren stellt R⁵ zum Beispiel einen Rest der allgemeinen Formel (II) 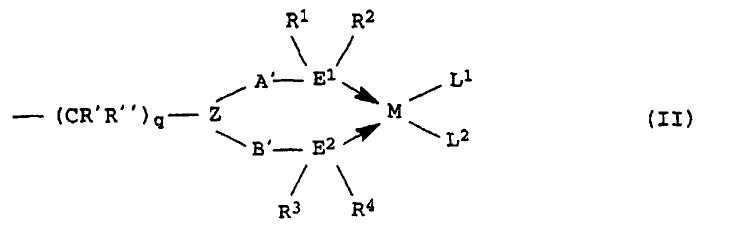 dar, in der q eine ganze Zahl von 0 bis 20 bedeutet und R', R'' Wasserstoff oder Substituenten, ausgewählt aus der Gruppe entstehend aus C₁- bis C₂₀-kohlenstofforganischen und C₃- bis C₃₀-siliciumorganischen Resten, darstellen. Die weiteren Substituenten Z, A', B', E¹, E², R¹ bis R⁴, M und L¹, L² in (II) entsprechen dabei in ihren Bedeutungen den bereits zu Formel (I) gemachten Ausführungen, wobei in den Metallkomplexen (I) für den Fall, daß R⁵ = (II) ist, die beiden dann in (I) vorliegenden bidentaten Chelatliganden nicht identisch übereinstommen müssen. Vielmehr fallen auch solche Metallkomplexe unter den Gegenstand der vorliegenden Erfindung, bei denen die jeweiligen Substituenten teilweise oder vollständig nicht übereinstimmen. Demgemäß kommen zum Beispiel Verbindungen in Betracht wie 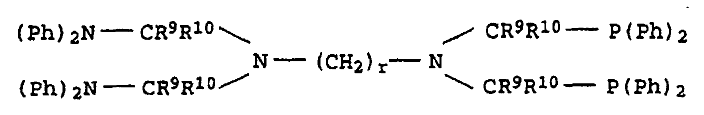 oder 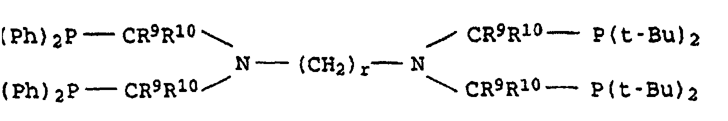 mit r = 0 bis 10
und R⁹, R¹⁰, unabhängig voneinander, die bereits vorhergehend beschriebenen Substituenten einnehmen können.

Bevorzugt werden als Reste R⁵ t-Butyl, Phenyl, o-Methoxyphenyl, p-Trifluormethylphenyl, 4-Aminophenyl, 4-N,N'-Dimethylaminophenyl, 4-Hydroxphenyl oder - (CH₂)ₙ-SO₃^{⊖}, -(CH₂)ₙ-NR₃^{⊕}, -(CH₂)ₙ-OH (n = 5-20) eingesetzt.

Geeignete Anionen X sind beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Hexafluorophosphat, Hexafluoroarsenat oder Hexafluoroantimonat. Vorzugsweise verwendet man Perchlorat, Trifluoracetat, Sulfonate wie Methylsulfonat, Trifluormethylsulfonat, p-Toluolsulfonat, Tetrafluoroborat oder Hexafluorophosphat und insbesondere Trifluormethylsulfonat, Trifluoracetat, Perchlorat oder p-Toluolsulfonat.

Besonders geeignet sind Chelatliganden der allgemeinen Formel (III), in der die Substituenten die folgende Bedeutung haben:
- E¹, E²: Stickstoff oder Phosphor,
- Z: Stickstoff oder Phosphor,
- R¹ bis R⁴: unabhängig voneinander, geradkettige oder verzweigte C₁- bis C₂₀-aliphatische Reste, wie Methyl, Ethyl, n-Propyl, i-Propyl, n-Butyl, i-Butyl, s-Butyl, t-Butyl sowie Pentyl, Hexyl, Octyl und deren Strukturanaloga, aliphatische C₃- bis C₁₀-monocyclische Reste, wie Cyclopropyl, Cyclobutyl, Cyclopentyl, Cyclohexyl, Menthyl, bicyclische Reste, wie Norbornyl, Pinanyl, Bornyl, Bicyclononyl, C₆- bis C₂₀-Arylreste in substituierter und unsubstituierter Form, wie Phenyl, Tolyl, Xylyl, o-Methoxyphenyl. p-Trifluormethylphenyl, C₃- bis C₂₀-Heteroarylreste, wie Pyridyl, Pyrimidyl, Pyrazinyl, Triazinyl, auch substituiert mit Alkyl- oder Arylgruppen, oder Aralkylreste mit jeweils 1 bis 6 C-Atomen im Alkylrest und 6 bis 14 C-Atomen im Arylrest,
- R⁵: Wasserstoff, geradkettige und verzweigte C₁- bis C₂₀-aliphatische Reste, wie Methyl, Ethyl, n-Propyl, i-Propyl, n-Butyl, i-Butyl, s-Butyl, t-Butyl sowie Pentyl, Hexyl, Octyl und deren Strukturanaloga, C₃- bis C₁₀-aliphatische Monocyclen, wie Cyclopropyl, Cyclopentyl, Cyclohexyl, Bicyclen, wie Norbornyl, Pinanyl, Bornyl, Bicyclononyl, C₆- bis C₂₀-Arylgruppen, wie Phenyl, Naphthyl, die gegebenenfalls einfach oder mehrfach mit Alkyl-, Aryl- oder funktionellen Gruppen auf der Basis von Elementen der IV., V., VI. oder VII. Hauptgruppe des Periodensystems der Elemente, wie Silyl, Amino, Alkoxy, Hydroxy oder Halogen, substituiert sein können, Aralkylreste mit jeweils 1 bis 6 C-Atomen im Alkylrest und 6 bis 14 C-Atomen im Arylrest, wie Benzyl, C₃- bis C₂₀-Heteroarylreste, wie Pyridyl, Pyrimidyl, Pyrazinyl, Triazinyl, auch substituiert mit Alkyl- oder Arylgruppen, funktionalisierte C₅- bis C₃₀-Alkylenreste -(CH₂)ₙ-Q, auch substituiert, ggf. mit Heteroatomen, wie Sauerstoff oder Stickstoff, oder Aryleneinheiten, wie Phenylen, in der Alkylenkette, mit Q = -SO₃^{⊖}, CO₂^{⊖}, CO₂R, -CONR₂, Halogen, (F, Cl, Br, I), -NR₂, -OR, NR₃^{⊕} und n = 5-30, besonders bevorzugt 10-30, wobei R z.B. Wasserstoff, C₁- bis C₂₀-Alkyl oder C6- bis C₂₀-Aryl bedeutet,
Aminorest -NR⁶R⁷, mit R⁶, R⁷ wie vorgehend definiert. C₃- bis C₃₀-siliciumorganische Reste, wie Trimethylsilyl, t-Butyldimethylsilyl, Triphenylsilyl.
- A', B': C₁- bis C₄-Alkyleneinheiten, auch substituiert, wie Methylen, Ethylen, n-Propylen, Ethyliden, Propyliden, Benzyliden, Silylenreste -R'SiR"-, mit R',R" als C₁- bis C₂-Alkyleneinheiten, auch substituiert, wobei die freien Valenzen am Silicium durch Alkylgruppen, wie Methyl, oder Arylgruppen, wie Phenyl, abgesättigt sind,
-NR⁸-Reste mit R⁸ als C₁- bis C₄-Alkyl, auch substituiert, wie Methyl, Ethyl, Aryl, wie Phenyl, ein ein-, zwei-, drei- oder vieratomiger Bestandteil eines aliphatischen oder aromatischen Ringsystems, wie die Methylen- oder Ethyleneinheit in Cyclopropyl, Cyclopentyl, Cyclohexyl.

Vorzugsweise verwendet man verbrückte Diphosphane (III) mit mindestens einem Stickstoffatom in der Brücke als Chelatligand, beispielsweise
Bis(diphenylphosphinomethyl)phenylamin,
Bis(diphenylphosphinomethyl)t-butylamin,
Bis(diphenylphosphinomethyl)methylamin,
Bis(dicylohexylphosphinomethyl)phenylamin,
Bis(dicylohexylphosphinomethyl)t-butylamin,
Bis(dicylohexylphosphinomethyl)methylamin,
Bis (di-t-butylphosphinomethyl)phenylamin,
Bis(di-t-butylphosphinomethyl)t-butylamin,
Bis(di-t-butylphosphinomethyl)methylamin,
Bis(o-methoxyphenylphosphinomethyl)phenylamin,
Bis(o-methoxyphenylphosphinomethyl)t-butylamin,
Bis(o-methoxyphenylphosphinomethyl)methylamin,
Bis(diphenylphosphinoethyliden)phenylamin,
Bis(diphenylphosphinoethyliden)t-butylamin,
Bis(diphenylphosphinoethyliden)methylamin,
Bis(dicyclohexylphosphinoethyliden)phenylamin,
Bis(dicyclohexylphosphinoethyliden)t-butylamin,
Bis(dicyclohexylphosphinoethyliden)methylamin,
Bis(di-t-butylphosphinoethyliden)phenylamin,
Bis(di-t-butylphosphinoethyliden)t-butylamin,
Bis(di-t-butylphosphinoethyliden)methylamin,
Bis(o-methoxyphenylphosphinoethyliden)phenylamin,
Bis(o-methoxyphenylphosphinoethyliden)t-butylamin,
Bis(o-methoxyphenylphosphinoethyliden)methylamin,
Bis(diphenylphosphinobenzyliden)phenylamin,
Bis(diphenylphosphinobenzyliden)t-butylamin,
Bis(diphenylphosphinobenzyliden)methylamin,
Bis(dicylohexylphosphinobenzyliden)phenylamin,
Bis(dicylohexylphosphinobenzyliden)t-butylamin,
Bis(dicylohexylphosphinobenzyliden)methylamin,
Bis(di-t-butylphosphinobenzyliden)phenylamin,
Bis(di-t-butylphosphinobenzyliden)t-butylamin,
Bis(di-t-butylphosphinobenzyliden)methylamin,
Bis(o-methoxyphenylphosphinobenzyliden)phenylamin,
Bis(o-methoxyphenylphosphinobenzyliden)t-butylamin,
Bis(o-methoxyphenylphosphinobenzyliden)methylamin,
Bis(diphenylphosphinopropyliden)phenylamin,
Bis(diphenylphosphinopropyliden)t-butylamin,
Bis(diphenylphosphinopropyliden)methylamin,
Bis (dicyclohexylphosphinopropyliden)phenylamin,
Bis(dicyclohexylphosphinopropyliden)t-butylamin,
Bis(dicyclohexylphosphinopropyliden)methylamin,
Bis(di-t-butylphosphinopropyliden)phenylamin,
Bis(di-t-butylphosphinopropyliden)t-butylamin,
Bis (di-t-butylphosphinopropyliden)methylamin,
Bis(o-methoxyphenylphosphinopropyliden)phenylamin,
Bis(o-methoxyphenylphosphinopropyliden)t-butylamin,
Bis(o-methoxyphenylphosphinopropyliden)methylamin.

Des weiteren sind, analog zu der aufgeführten Liste, Verbindungen geeignet, in denen R⁵ eine p-Hydroxyphenyl- oder eine C₃- bis C₁₀-Alkanolgruppe, wie 4-Butanol, darstellt.

Des weiteren können auch Chelatliganden (III) eingesetzt werden, die an E¹ und E² nichtidentische Substituenten R¹ bis R⁴ aufweisen. In einer erfindungsgemäßen Ausführungsform stimmen die Reste R¹ und R² an E¹ bzw. R³ und R⁴ an E² jeweils überein, jedoch sind R¹, R² nicht identisch mit R³, R⁴.

Als solche geeignete Verbindungen seien beispielsweise genannt: (Diphenylphosphinomethyl)(dicyclohexylphosphinomethyl)phenylamin, (Diphenylphosphinomethyl)(di-t-butylphosphinomethyl)phenylamin, (Di-o-methoxyphenylphosphinomethyl)(dicyclohexylphosphinomethyl)-t-butylamin sowie alle weiteren Kombinationen der in der vorhergehenden Liste aufgeführten Aminsubstituenten, soweit diese zu Bisphosphinverbindungen führen.

Daneben kommt jede mögliche Kombination an Resten R¹ bis R⁴, die zu unsymmetrischen Chelatliganden führt, in Betracht.

Darüber hinaus seien insbesondere auch solche Chelatliganden aufgeführt, die im Rest R⁵ eine geladene funktionelle Gruppe tragen, beispielsweise
Bis(diphenylphosphinomethyl)(dodecyl-1-sulfonsäure)amin oder
Bis(diphenylphosphinomethyl)(octadecyl-1-sulfonsäure)amin.

Die Chelatliganden (III) können zur Herstellung der erfindungsgemäßen Metallkomplexe (I) verwendet werden.

Die Herstellung der Chelatphosphane (III) kann wie beschrieben in A.L. Balch, M.M. Olmstead, S.P. Rowley, Inorg. Chim. Acta, 1990, 168, 255-264 bzw. J. Fawcett, P.A.T. Hoye, R.D.W. Kemmitt, D.J. Law, D.R. Russell, J. Chem. Soc., Dalton Trans. 1993, 2563 - 2568 erfolgen. Beispielsweise setzt man Diphenylphosphan mit Paraformaldehyd und Anilin in Toluol bei 65°C um und erhält nach einer Reaktionszeit von etwa 4 h das Chelatphosphan in hoher Ausbeute.

Die erfindungsgemäßen Metallkomplexe der allgemeinen Formel (I) können nach folgenden Verfahren hergestellt werden.

Die Herstellung erfolgt für die neutralen Chelatkomplexe (p = 0) durch Austausch von schwach koordinierenden Liganden, wie zum Beispiel 1,5-Cyclooctadien, Benzonitril oder Tetramethylethylendiamin, die an die entsprechenden Übergangsmetallverbindungen, beispielsweise Übergangsmetall-Halogenide, Übergangsmetall(Alkyl)(Halogenide), Übergangsmetall-Diorganyle, gebunden sind, gegen die erfindungsgemäßen Chelatliganden der allgemeinen Formel (III) in der vorhergehend beschriebenen Bedeutung.

Die Reaktion wird im allgemeinen in einem Lösungsmittel, wie beispielsweise Dichlormethan bei Temperaturen im Bereich von -78 bis +40°C durchgeführt.

Des weiteren können neutrale Metallkomplexe (I), in denen L¹ und L² Carboxylat, z.B. Acetat, bedeuten, durch Umsetzung von beispielsweise Pd(OAc)₂ mit den beschriebenen Chelatliganden in Toluol oder Aceton bei Raumtemperatur hergestellt werden.

Als weitere Synthesemethode kommt die Umsetzung der Chelatkomplexe der allgemeinen Formel (I) mit Organometallverbindungen der Gruppen IA, IIA, IVA und IIB in Frage, beispielsweise C₁- bis C₆-Alkyle der Metalle Lithium, Aluminium, Magnesium, Zinn, Zink, wobei formal geladene anorganische Liganden L¹, L² wie vorher definiert, gegen formal geladene aliphatische, cycloaliphatische oder aromatische Liganden L¹, L² wie ebenfalls vorher definiert, ausgetauscht werden. Die Reaktion wird im allgemeinen in einem Lösungsmittel, wie beispielsweise Diethylether oder Tetrahydrofuran bei Temperaturen im Bereich von -78 bis 65°C durchgeführt.

Monokationische Komplexe der allgemeinen Formel (I) (p = 1) werden durch Umsetzung von (Chelatligand)Metall(Halogeno)(Organo)-Komplexen der allgemeinen Formel (I), in der L¹ Halogen und L² die vorher definierten formal geladenen organischen Liganden (unter Ausschluß der Anionen organischer Säuren) bedeuten, mit Metallsalzen MX gebildet. Desweiteren können monokationische Komplexe der allgemeinen Formel (I) durch Umsetzung von (Chelatligand) Metall (Dihalogeno)-Komplexen mit stöchiometrischen Mengen eines Metallsalzes MX erhalten werden. Die Umsetzungen werden im allgemeinen in koordinierenden Lösungsmitteln wie beispielsweise Acetonitril oder Tetrahydrofuran bei Temperaturen im Bereich von -78 bis 65 °C durchgeführt.

Es ist vorteilhaft, wenn die Metallsalze MX folgende Kriterien erfüllen. Das Metall M soll vorzugsweise schwer lösliche Metallchloride bilden, wie zum Beispiel Silberchlorid. Das Salz-Anion soll vorzugsweise ein nicht-nucleophiles Anion X, wie vorher definiert, sein.

Gut geeignete Salze für die Bildung von kationischen Komplexen sind Silbertetrafluoroborat, Silberhexafluorophosphat, Silbertrifluormethansulfonat, Silberperchlorat, Silberparatoluolsulfonat, Silbertrifluoracetat und Silbertrichloracetat.

Die dikationischen Komplexe (p = 2) werden analog den monokationischen Komplexen hergestellt, nur daß jetzt anstatt der (Chelatligand)Metall(Halogeno)(Organo)-Komplexe die (Chelatligand)Metall(di-Halogeno)-Komplexe als Vorstufe eingesetzt werden.

Als weiteres Verfahren zur Herstellung der dikationischen Komplexe (I) kommt die Umsetzung von [G₄M]X₂ mit den eingangs definierten Chelatliganden der allgemeinen Formel (III) in Frage. Hierbei bedeutet G gleiche oder unterschiedliche schwache Liganden wie beispielsweise Acetonitril, Benzonitril oder 1,5-Cyclooctadien, M und X haben die vorher definierte Bedeutung.

Ein bevorzugtes Verfahren zur Herstellung der Metallkomplexe der allgemeinen Formel (I) ist die Umsetzung der Dihalogenmetall-Vorläufer-Komplexe mit Silbersalzen mit nicht-koordinierenden Anionen.

Die erfindungsgemäßen Metallkomplexe (I) können als Katalysatoren oder als wesentlicher Bestandteil von Katalysatorsystemen zur Herstellung von Copolymeren aus Kohlenmonoxid und olefinisch ungesättigten Verbindungen verwendet werden.

Die Monomere werden im allgemeinen alternierend in das Copolymer eingebaut.

Als olefinisch ungesättigte Verbindungen kommen grundsätzlich alle Monomere dieser Verbindungsklasse in Betracht.

### Beispiele

### Abkürzungen:

- Pd(OAc)₂:: Palladiumdiacetat
- dpmpa:: Bis (diphenylphosphinomethyl)phenylamin
- dpmba:: Bis(diphenylphosphinomethyl)t-butylamin
- P-TSS:: p-Toluolsulfonsäure

### A. Herstellung der Chelatliganden (III)

### Beispiel 1: Bis(diphenylphosphinomethyl)-t-butylamin

Paraformaldehyd (2,56 g; 85,2 mmol) wurde in Toluol (120 ml) suspendiert und bei 65°C mit t-Butylamin (3,12 g; 42,6 mmol) und Diphenylphosphan (15,86 g; 85,2 mmol) versetzt. Die Reaktion wurde 4 h unter Rückfluß gehalten, das Lösungsmittel im Vakuum entfernt und der Rückstand in Dichlormethan gelöst. Das Produkt wurde durch Zugabe von Ethanol, ggf. in der Kälte, ausgefällt, abfiltriert und nach Trocknen im Vakuum als weißes Öl erhalten (94 % Ausbeute); ³¹p-NMR: δ = -24,3 ppm.

### Beispiel 2: Bis(di-t-butylphosphinomethyl)phenylamin

Paraformaldehyd (1,03 g; 34,2 mmol) wurde in Toluol (60 ml) suspendiert und bei 65°C mit Anilin (1,59 g; 17,1 mmol) und Di(t-butyl)phosphan (5,0 g; 34,3 mmol) versetzt. Die Reaktion wurde 4 h unter Rückfluß gehalten, das Lösungsmittel im Vakuum entfernt und der Rückstand in Dichlormethan gelöst. Das Produkt wurde durch Zugabe von Ethanol, ggf. in der Kälte, ausgefällt, abfiltriert und nach Trocknen im Vakuum als weißer Feststoff erhalten (45 % Ausbeute); ³¹p-NMR: δ = 12,9 ppm.

### Beispiel 3: Bis(diphenylphosphinomethyl)-4-hydroxyphenylamin

Zu Toluol (80 ml) wurden 4-Hydroxyanilin (2,38 g; 21,8 mmol), Paraformaldehyd (1,31 g; 43,6 mmol) und Diphenylphosphan (8,12 g; 43,6 mmol) gegeben. Die Suspension wurde auf 90°C erhitzt und über Nacht bei dieser Temperatur gerührt. Nach Abkühlen der Reaktionslösung wurde das Lösungsmittel im Vakuum entfernt, das gelbliche Öl in Dichlormethan (15 ml) gelöst und Pentan (40 ml) zugegeben. Das Chelatphosphan kristallisierte in der Kälte aus, es wurde abfiltriert und im Vakuum getrocknet (72,1 % Ausbeute); ³¹p-NMR: δ = -26,5 ppm.

### Beispiel 4: Bis(diphenylphosphinomethyl)-2-hydroxyethylamin

Paraformaldehyd (1,31 g; 43,6 mmol) wurde in Toluol (80 ml) suspendiert und auf 65°C erhitzt. Unter Rühren gab man Ethanolamin (1.33 g; 21,8 mmol) und Diphenylphosphan (8,12 g; 43,6 mmol) zu und rührte für weitere 3 h bei 65°C. Nach Abkühlen der Lösung entfernte man das Lösungsmittel im Vakuum, das erhaltene Öl wurde in Dichlormethan (12 ml) gelöst und mit Pentan (175 ml) versetzt. Unter Rühren schied sich das Chelatphosphan als weißes kristallines Pulver ab; es wurde abfiltriert und im Vakuum getrocknet (56,1 % Ausbeute); ³¹p-NMR: δ = -27,7 ppm.

### Beispiel 5: Bis(diphenylphosphinoethyl)phenylamin

(Diphenylphosphino)ethanol (4,68 g; 19,96 mmol) wurde in Toluol (50 ml) gelöst, mit Anilin (0,93 g; 10,00 mmol) in Toluol (25 ml) versetzt und für 18 h bei 65°C gerührt. Nach Abkühlen der Lösung wurde das Lösungsmittel im Vakuum entfernt, der Rückstand in Dichlormethan (10 ml) aufgenommen und das Chelatphosphan mit Pentan (200 ml) ausgefällt. Nach Abfiltrieren und Trocknen im Vakuum erhielt man das Chelatphosphan als weißen Feststoff.

### Beispiel 6: (Diphenylphosphinomethyl) (dicyclohexylphosphinomethyl)phenylamin

Diphenylphosphinomethanol (10,9 g; 50 mmol) wurde in Toluol (60 ml) aufgenommen und mit Anilin (4,6 g; 50 mmol) bei Raumtemperatur versetzt. Nach 10 min bildete sich ein weißlicher Niederschlag, woraufhin die Suspension für weitere 15 h gerührt wurde. Man gab Dicyclohexylphosphinomethanol (11,4 g; 50 mmol) zu, erhitzte die Reaktionslösung auf 65°C, rührte für weitere 5 h, engte das Lösungsmittel unter Vakuum ein und nahm den Rückstand in Dichlormethan (15 ml) auf. Nach Zugabe von Pentan (400 ml) fiel das Chelatphosphan in der Kälte als weißer Niederschlag aus (83,6 % Ausbeute). Es wurde abfiltriert und im Vakuum getrocknet.

### Beispiel 7: (Diphenylphosphinoethyl)phenylamin

Diphenylphosphinoethanol (4,68 g; 19,98 mmol) wurde in Toluol (30 ml) aufgenommen und mit einem Äquivalent Anilin (1,86 g; 19,97 mmol) unter Rühren bei 65°C umgesetzt. Nach 18 h wurde das Lösungsmittel entfernt, der Rückstand in Dichlormethan (50 ml) aufgenommen und das Phosphan mit Pentan (10 ml) ausgefällt, filtriert, im Vakuum getrocknet und als weißes Pulver isoliert.

### Beispiel 8: (Diphenylphosphinomethyl)(diphenylphosphinoethyl)phenylamin

(Diphenylphosphinoethyl)phenylamin (4,58 g; 15,0 mmol) wurd in Toluol (30 ml) aufgenommen, mit Diphenylphosphinomethanol (3,32 g; 15,0 mmol) unter Rühren versetzt und für 3 h bei 65°C gerührt. Das Lösungsmittel wurde im Vakuum abgezogen, der Rückstand in Dichlormethan (10 ml) aufgenommen, das Chelatphosphan mit Pentan (400 ml) als Feststoff ausgefällt abfiltriert und unter Vakuum getrocknet (47,2 % Ausbeute).

### B. Allgemeine Vorschrift für die Herstellung von Metallkomplexen (I)

Der Metalldihalogenid-Chelatkomplex (A) wurde in 20 ml Acet nitril gelöst. Danach wurde das Silbersalz (B) zugegeben, die Mischung 18 h bei Raumtemperatur gerührt, der gebildete Niederschlag abfiltriert und aus dem Filtrat durch Einengen und Zugeben von Diethylether das Produkt isoliert.

### C. Herstellungsbeispiele für kationische Metallkomplexe

### a) Herstellung von Monokation-Komplexen

| Beispiel 1: [(dpmpa)PdCl(MeCN)](ClO₄) | | | |
|---|---|---|---|
| (A) | (dpmpa)PdCl₂ | 642 mg | 0,963 mmol |
| (B) | AgClO₄ | 221 mg | 1,066 mmol |

Ausbeute: 407 mg (48 %)

| Elementaranalyse | berechnet: | gefunden: |
|---|---|---|
| | C: 52,9; H: 4,18; | C: 51,0; H: 3,9; |
| | O: 8,29; N: 3,63; | O: 9,2; N: 2,9; |
| | P: 8,03; | P: 7,5; Pd: 13,0. |
| | Pd: 13,79. | |

### b) Herstellung von Dikation-Komplexen

| Beispiel 2 : [(dpmpa)Pd(MeCN)₂](ClO₄)₂ | | | |
|---|---|---|---|
| (A) | (dpmpa)PdCl₂ | 868 mg | 1,302 mmol |
| (B) | AgClO₄ | 638 mg | 2,831 mmol |

Ausbeute: 1,1 g (88 %)

| Elementaranalyse | berechnet: | gefunden: |
|---|---|---|
| | C: 49,31; H: 4,02; | C: 47,4; H: 4,2; |
| | O: 4,79; N: 14,80; | O: 4,5; N; 15,0; |
| | P: 7,06; | P: 6,7; Pd: 11,3. |
| | Pd: 12,14. | |

| Beispiel 3: [(dpmba)Pd(MeCN)₂](ClO₄)₂ | | | |
|---|---|---|---|
| (A) | (dpmba)PdCl₂ | 1,65 g | 22,55 mmol |
| (B) | AgClO₄ | 1,262 g | 5,60 mmol |

Ausbeute: 2,215 g (100 %); ³¹p-NMR: δ = 11,7 ppm.

## Patentansprüche

1. Cis-verbrückte Metallkomplexe der allgemeinen Formel (I) 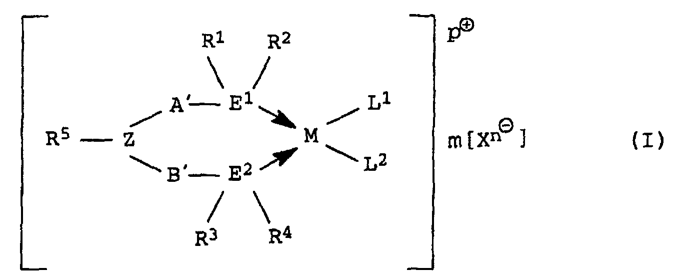 in welcher die Substituenten und Indizes die folgende Bedeutung haben:
R⁵ Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 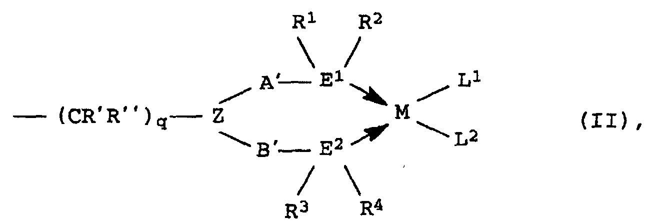 in der
q eine ganze Zahl von 0 bis 20 bedeutet und
R', R" Wasserstoff oder Substituenten, ausgewählt aus der Gruppe bestehend aus C₁- bis C₂₀-kohlenstofforganischen und C₃- bis C₃₀-siliciumorganischen Resten, darstellen und die weiteren Substituenten in (II) wie in (I) die nachfolgende Bedeutung haben,
M ein Metall aus der Gruppe VIIIB des Periodensystems der Elemente,
E¹, E² ein Element aus der Gruppe VA des Periodensystems der Elemente,
Z ein Element aus der Gruppe VA des Periodensystems der Elemente,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie NR⁸-Reste,
R⁶ bis R⁸ Wasserstoff oder Substituenten, ausgewählt aus der Gruppe bestehend aus C₁- bis C₂₀-kohlenstofforganischen und C₃- bis C₃₀-siliciumorganischen Resten,
L¹,L² neutrale Liganden,
X formal ein- oder mehrwertige Anionen,
p 0, 1, 2, 3 oder 4,
m, n 0, 1, 2, 3 oder 4,
wobei p = m x n.

2. Cis-verbrückte Metallkomplexe der allgemeinen Formel (I) 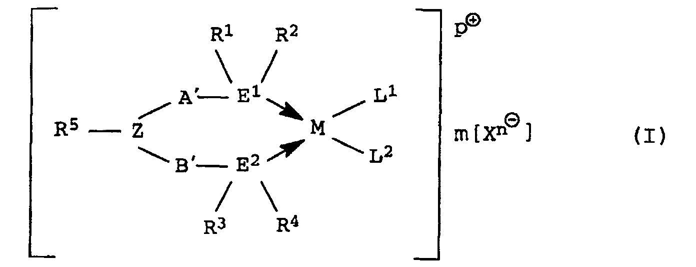 in welcher die Substituenten und Indizes die folgende Bedeutung haben:
R⁵ Wasserstoff, aliphatische Reste, wie Methyl, Ethyl, i-Propyl oder t-Butyl, cycloaliphatische Reste, wie Cyclopentyl oder Cyclohexyl, aromatische Reste, wie Phenyl, o-Methoxyphenyl oder 4-Hydroxyphenyl, Substituenten mit anionischen Gruppen, wie -(CH₂)ₙ-SO₃⁻, Substituenten mit kationischen Gruppen, wie -(CH₂)ₙ-NR₃⁺ oder Hydroxyoder Aminogruppen enthaltende Substituenten, wie -(CH₂)ₙ-OH bzw. -(CH₂)ₙ-NR₂ (n = 1 bis 30), Reste der allgemeinen Formel (II) 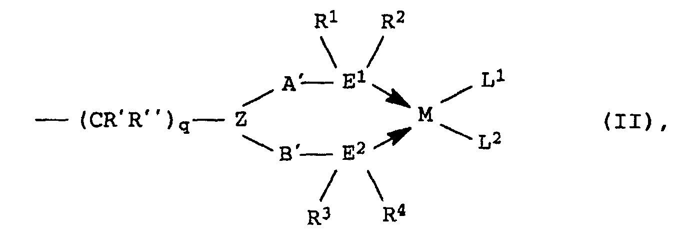 in der
q eine ganze Zahl von 0 bis 20 bedeutet und
R', R" unabhängig voneinander Wasserstoff oder C₁- bis C₁₀-Alkyl, geradkettig oder verzweigt, wie Methyl, Ethyl, i-Propyl, n-Propyl, C₃- bis C₁₀-Cycloalkyl wie Cyclopropyl, Cyclopentyl, Cyclohexyl, C₆- bis C₁₄-Aryl, wie Phenyl, bedeuten und
die weiteren Substituenten in (II) wie in (I) die nachfolgende Bedeutung haben,
M Palladium oder Nickel,
E¹, E² Stickstoff oder Phosphor,
Z Stickstoff,
R¹ bis R⁴ cycloaliphatische Reste, wie Cyclohexyl oder Menthyl, verzweigte aliphatische Reste, wie i-Propyl, s-Butyl oder t-Butyl, aromatische Reste, wie Phenyl, o-Methoxyphenyl oder p-Trifluormethylphenyl und heteroaromatische Reste, wie Pyridyl,
A', B' Methylen oder Ethylen in substituierter und unsubstituierter Form, beispielsweise Ethyliden oder Propyliden, Benzyliden, o-Phenylen,
L¹, L² Hydride, Sulfate, Phosphate, Nitrate, Acetonitril, Methanol, Acetylaceton, Tetrahydrofuran, Acetat, Trifluoracetat, Tosylat, Wasser,
X Tetrafluoroborat, Hexafluorophosphat, Hexafluoroantimonat, Pentafluorbenzoat, Trifluormethansulfonat, Trifluoracetat, Perchlorat, p-Toluolsulfonat, Tetraarylborate,
p 0, 1, 2, 3 oder 4,
m, n 0, 1, 2, 3 oder 4,
wobei p = m x n.

3. Cis-verbrückte Metallkomplexe der allgemeinen Formel (I) 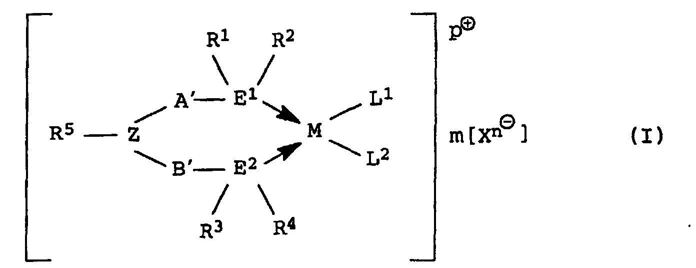 in welcher die Substituenten und Indizes die folgende Bedeutung haben:
R⁵ Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten,
M ein Metall aus der Gruppe VIIIB des Periodensystems der Elemente,
E¹, E² ein Element aus der Gruppe VA des Periodensystems der Elemente,
Z ein Element aus der Gruppe VA des Periodensystems der Elemente,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie NR⁸-Reste,
R⁶ bis R⁸ Wasserstoff oder Substituenten, ausgewählt aus der Gruppe bestehend aus C₁- bis C₂₀-kohlenstofforganischen und C₃- bis C₃₀-siliciumorganischen Resten,
X formal ein- oder mehrwertige Anionen,
p 0, 1, 2, 3 oder 4,
m, n 0, 1, 2, 3 oder 4,
wobei p = m x n; und
L^{1,} L² formal geladene oder neutrale Liganden bedeuten, wobei L¹ oder L², nicht jedoch L¹ und L² gleichzeitig, ein Halogenid darstellen.

4. Cis-verbrückte Metallkomplexe der allgemeinen Formel (I) 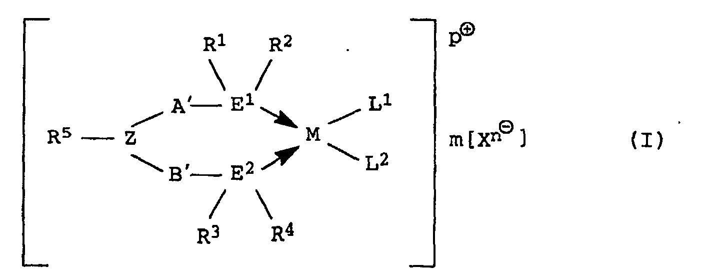 in welcher die Substituenten und Indizes die folgende Bedeutung haben:
R⁵ Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 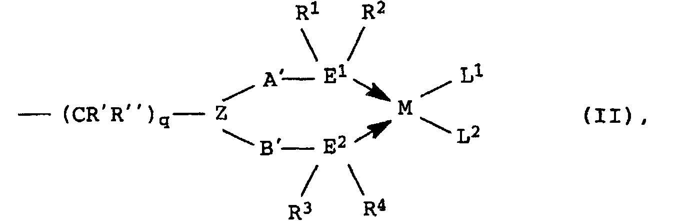 in der
q eine ganze Zahl von 0 bis 20 bedeutet und
R', R" Wasserstoff oder Substituenten, ausgewählt aus der Gruppe bestehend aus C₁- bis C₂₀-kohlenstofforganischen und C₃- bis C₃₀-siliciumorganischen Resten, darstellen und
die weiteren Stubstituenten in (II) wie in (I) die nachfolgende Bedeutung haben,
M ein Metall aus der Gruppe VIIIB des Periodensystems der Elemente,
E¹, E² ein Element aus der Gruppe VA des Periodensystems der Elemente,
Z ein Element aus der Gruppe VA des Periodensystems der Elemente,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie NR⁸-Reste,
R⁶ bis R⁸ Wasserstoff oder Substituenten, ausgewählt aus der Gruppe bestehend aus C₁- bis C₂₀-kohlenstofforganischen und C₃- bis C₃₀-siliciumorganischen Resten,
L¹,L² C₁- bis C₂₀-Carboxylate, organische Sulfonate, Nitrile, Ketone, Ether, Alkohole, Wasser, C₁- bis C₂₀-aliphatische, C₅- bis C₃₀-cycloaliphatische, C₇- bis C₂₀-Aralkylreste mit C₆- bis C₁₄-Aryl- und C₁- bis C₆-Alkylresten sowie C₆- bis C₂₀-aromatische Reste,
X formal ein- oder mehrwertige Anionen,
p 0, 1, 2, 3 oder 4,
m, n 0, 1, 2, 3 oder 4,
wobei p = m x n.

5. Metallkomplexe nach den Ansprüchen 1 bis 4, **dadurch gekennzeichnet, daß** E¹ und E² Phosphor bedeuten.

6. Metallkomplexe nach den Ansprüchen 1 bis 5, **dadurch gekennzeichnet, daß** M Palladium bedeutet.

7. Verwendung der Metallkomplexe gemäß den Ansprüchen 1 bis 6 als Katalysatoren oder als wesentliche Bestandteile von Katalysatorsystemen zur Copolymerisation von Kohlenmonoxid mit olefinisch ungesättigten Verbindungen.

## Claims

1. A cis-bridged metal complex of the formula (I) 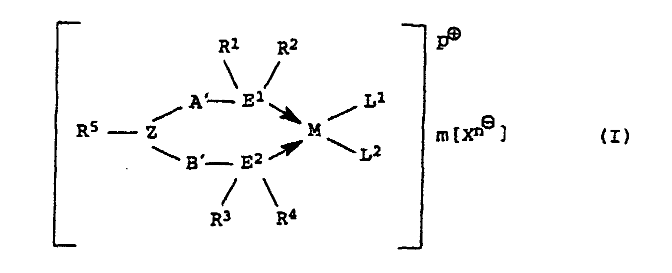 where the substituents and indices have the following meanings:
R⁵ is hydrogen or substituents selected from the group consisting of C₁-C₂₀-organic and C₃-C₃₀-organosilicon radicals in substituted and unsubstituted form, or an NR⁶R⁷ substituent or a radical of the formula II 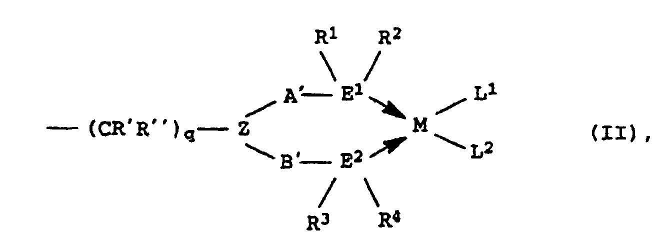 where
q is an integer from 0 to 20 and
R', R" are hydrogen or substituents selected from the group consisting of C₁-C₂₀-organic and C₃-C₃₀-organosilicon radicals, and
the further substituents in (II) as in (I) have the following meanings,
M is a metal of group VIIIB of the Periodic Table of the Elements,
E¹, E² are elements of group VA of the Periodic Table of the Elements,
Z is an element of group VA of the Periodic Table of the Elements,
R¹ to R⁴ are substituents selected, independently of one another, from the group consisting of C₁-C₂₀-organic and C₃-C₃₀-organosilicon radicals in substituted and unsubstituted form,
A', B' are C₁-C₄-alkylene units in substituted and unsubstituted form, silylene-bridged organic radicals or NR⁸ radicals,
R⁶ to R⁸ are hydrogen or substituents selected from the group consisting of C₁-C₂₀-organic and C₃-C₃₀-organosilicon radicals,
L¹, L² are uncharged ligands,
X is a formally monovalent or polyvalent anion,
p is 0, 1, 2, 3 or 4,
m, n are 0, 1, 2, 3 or 4,
where p = m x n.

2. A cis-bridged metal complex of the general formula (I) 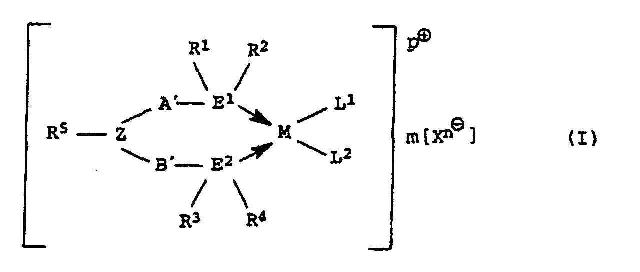 where substituents and indices have the following meanings:
R⁵ is hydrogen, an aliphatic radical such as methyl, ethyl, i-propyl or t-butyl, a cycloaliphatic radical such as cyclopentyl or cyclohexyl, an aromatic radical such as phenyl, o-methoxyphenyl or 4-hydroxyphenyl, a substituent containing anionic groups such as -(CH₂)ₙ-SO₃-, a substituent containing cationic groups such as -(CH₂)ₙ-NR₃⁺ or a hydroxy- or amino-containing substituent such as -(CH₂)ₙ-OH or -(CH₂)ₙ-NR₂ (n = 1-30), a radical of the formula (II) 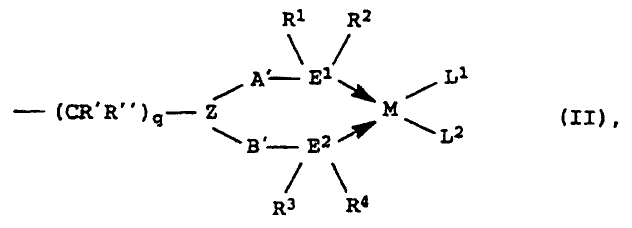 where
q is an integer from 0 to 20 and
R', R" are, independently of one another, hydrogen or C₁-C₁₀-alkyl, straight-chain or branched, such as methyl, ethyl, i-propyl, n-propyl, C₃-C₁₀-cycloalkyl such as cyclopropyl, cyclopentyl, cyclohexyl, C₆-C₁₄-aryl such as phenyl, and
the further substituents in (II) as in (I) have the following meanings,
M is palladium or nickel,
E¹, E² are nitrogen or phosphorus,
Z is nitrogen,
R¹ to R⁴ are cycloaliphatic radicals such as cyclohexyl or menthyl, branched aliphatic radicals such as i-propyl, s-butyl or t-butyl, aromatic radicals such as phenyl, o-methoxyphenyl or p-trifluoromethylphenyl and heteroaromatic radicals such as pyridyl,
A', B' are methylene or ethylene in substituted or unsubstituted form, for example ethylidene or propylidene, benzylidene, o-phenylene,
L¹, L² are hydrides, sulfates, phosphates, nitrates, acetonitrile, methanol, acetylacetone, tetrahydrofuran, acetate, trifluoroacetate, tosylate, water,
X is tetrafluoroborate, hexafluorophosphate, hexafluoroantimonate, pentafluorobenzoate, trifluoromethanesulfonate, trifluoroacetate, perchlorate, p-toluenesulfonate, tetraarylborates,
p is 0, 1, 2, 3 or 4,
m, n are 0, 1, 2, 3 or 4,
where p = m × n.

3. A cis-bridged metal complex of the general formula (I) 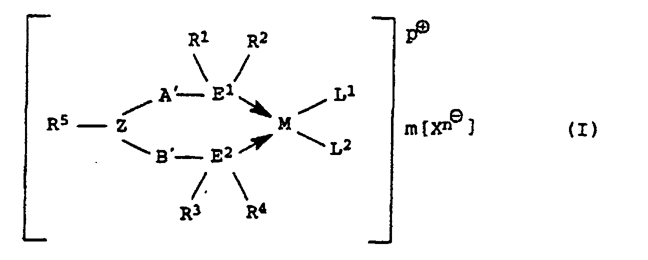 where the substituents and indices have the following meanings:
R⁵ is hydrogen or a substituent selected from the group consisting of C₁-C₂₀-organic and C₃-C₃₀-organosilicon radicals in substituted and unsubstituted form, or an NR⁶R⁷ substituent,
M is a metal of group VIIIB of the periodic table of the elements,
E¹, E² are elements of group VA of the periodic table of the elements,
Z is an element of group VA of the periodic table of the elements,
R¹ to R⁴ are substituents selected, independently of one another, from the group consisting of C₁-C₂₀-organic and C₃-C₃₀-organosilicon radicals in substituted and unsubstituted form,
A', B' are C₁-C₄-alkylene units in substituted and unsubstituted form, silylene-bridged organic radicals or NR⁸ radicals,
R⁶ to R⁸ are hydrogen or substituents selected from the group consisting of C₁-C₂₀-organic and C₃-C₃₀-organosilicon radicals,
X is a formally monovalent or polyvalent anion,
p is 0, 1, 2, 3 or 4,
m, n are 0, 1, 2, 3 or 4,
where p = m × n; and
L¹, L² are formally charged or uncharged ligands, where L¹ or L², but not L¹ and L² at the same time, is a halide.

4. A cis-bridged metal complex of the formula (I) 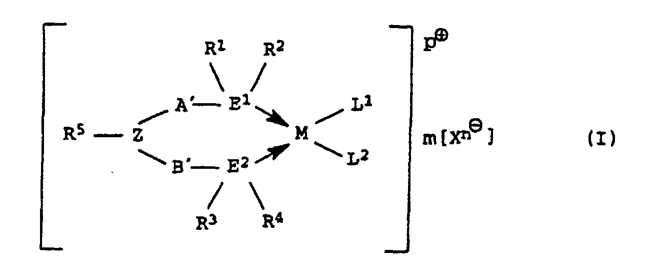 where the substituents and indices have the following meanings:
R⁵ is hydrogen or substituents selected from the group consisting of C₁-C₂₀-organic and C₃-C₃₀-organosilicon radicals in substituted and unsubstituted form, or an NR⁶R⁷ substituent or a radical of the formula II 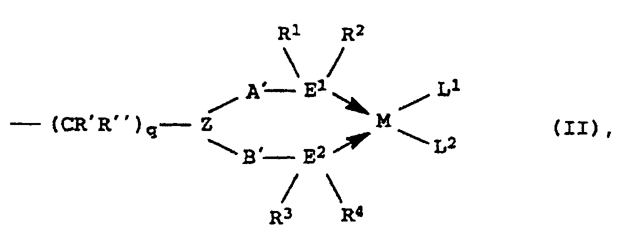 where
q is an integer from 0 to 20 and
R', R" are hydrogen or substituents selected from the group consisting of C₁-C₂₀-organic and C₃-C₃₀-organosilicon radicals, and
the further substituents in (II) as in (I) have the following meanings,
M is a metal of group VIIIB of the periodic table of the elements,
E¹, E² are elements of group VA of the periodic table of the elements,
Z is an element of group VA of the periodic table of the elements,
R¹ to R⁴ are substituents selected, independently of one another, from the group consisting of C₁-C₂₀-organic and C₃-C₃₀-organosilicon radicals in substituted and unsubstituted form,
A', B' are C₁-C₄-alkylene units in substituted and unsubstituted form, silylene-bridged organic radicals or NR⁸ radicals,
R⁶ to R⁸ are hydrogen or substituents selected from the group consisting of C₁-C₂₀-organic and C₃-C₃₀-organosilicon radicals,
L¹, L² are C₁-C₂₀-carboxylates, organic sulfonates, nitriles, ketones, ethers, alcohols, water, C₁-C₂₀-aliphatic radicals, C₅-C₃₀-cycloaliphatic radicals, C₇-C₂₀-aralkyl radicals having C₆-C₁₄-aryl radicals and C₁-C₆-alkyl radicals and also C₆-C₂₀-aromatic radicals,
X is a formally monovalent or polyvalent anion,
p is 0, 1, 2, 3 or 4,
m, n are 0, 1, 2, 3 or 4,
where p = m × n.

5. A metal complex as claimed in any of claims 1 to 4, wherein E¹ and E² are phosphorus.

6. A metal complex as claimed in any of claims 1 to 5, wherein M is palladium.

7. Use of a metal complex as claimed in any of claims 1 to 6 as a catalyst or as a significant constituent of a catalyst system for the copolymerization of carbon monoxide with olefinically unsaturated compounds.

## Revendications

1. Complexes métalliques pontés en cis de la formule générale (I) : 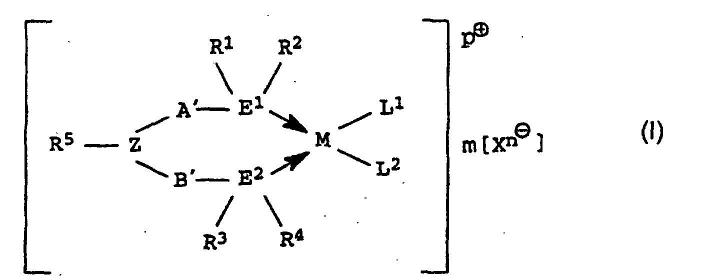 dans laquelle les substituants et indices ont la signification suivante :
R⁵ représente de l'hydrogène ou des substituants choisis parmi le groupe constitué de radicaux organiques du carbone en C₁-C₂₀ et de radicaux organosiliciques en C₃-C₃₀, sous une forme substituée ou non substituée, ou des substituants NR⁶R⁷, ou un radical de formule générale (II) : 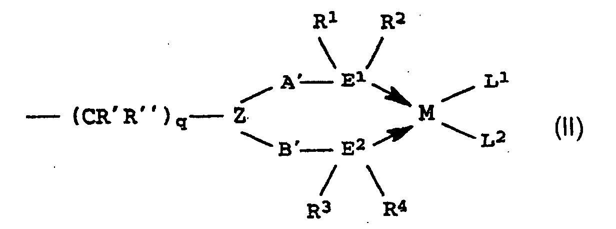 dans laquelle
q représente un nombre entier de 0 à 20, et
R', R" représentent de l'hydrogène ou des substituants choisis parmi le groupe constitué de radicaux organiques du carbone en C₁-C₂₀ et de radicaux organosiliciques en C₃-C₃₀,
les autres substituants ayant, dans (II) comme dans (I), la signification suivante :
M représente un métal du Groupe VIIIB du Système Périodique des Eléments,
E¹, E² représentent un élément du Groupe VA du Système Périodique des Eléments,
Z représente un élément du Groupe VA du Système Périodique des Eléments,
R¹ à R⁴ représentent des substituants choisis indépendamment l'un de l'autre dans le groupe constitué de radicaux organiques du carbone en C₁-C₂₀ et de radicaux organosiliciques en C₃-C₃₀, sous une forme substituée ou non substituée,
A', B' représentent des unités alkylène en C₁-C₄, sous une forme substituée ou non substituée, des radicaux organiques pontés par des silyles ainsi que des radicaux NR⁸,
R⁶ à R⁸ représentent de l'hydrogène ou des substituants choisis parmi le groupe constitué de radicaux organiques du carbone en C₁-C₂₀ et de radicaux organosiliciques en C₃-C₃₀,
L¹, L² représentent des ligands neutres,
X représente d'une manière formelle des anions monovalents ou plurivalents,
p représente 0, 1, 2, 3 ou 4,
m, n représentent 0, 1, 2, 3 ou 4,
p = m x n.

2. Complexes métalliques pontés en cis de la formule générale (I): 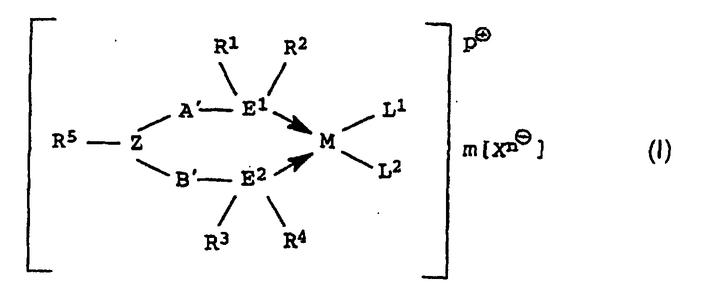 dans laquelle les substituants et indices ont la signification suivante :
R⁵ représente de l'hydrogène, des radicaux aliphatiques, comme du méthyle, de l'éthyle, de l'i-propyte ou du t-butyle, des radicaux cycloaliphatiques, comme du cyclopentyle ou du cyclohexyle, des radicaux aromatiques, comme du phényle, du o-méthoxyphényle ou du 4-hydroxyphényle, des substituants à groupes anioniques, comme -(CH₂)ₙ-SO₃⁻, des substituants à groupes cationiques, comme -(CH₂)ₙ-NR₃⁺ ou des substituants contenant des groupes hydroxy ou amino, comme -(CH₂)ₙ-OH ou -(CH₂)ₙ-NR₂ (n = 1 à 30), des radicaux de la formule générale (II) : 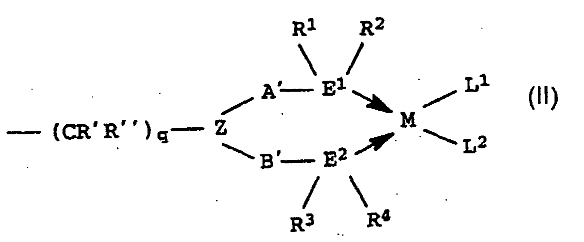 dans laquelle
q représente un nombre entier de 0 à 20, et
R', R" représentent indépendamment l'un de l'autre de l'hydrogène ou un alkyle en C₁-C₁₀, linéaire ou ramifié, comme du méthyle, de l'éthyle, de l'i-propyle, du n-propyle, un cycloalkyle en C₃-C₁₀, comme du cyclopropyle, du cyclopentyle, du cyclohexyle, un aryle en C₆-C₁₄, comme du phényle, et
les autres substituants ayant, dans (II) comme dans (I), la signification suivante :
M représente du palladium ou du nickel,
E¹, E² représentent de l'azote ou du phosphore,
Z représente de l'azote,
R¹ à R⁴ représentent des radicaux cycloaliphatiques, comme du cyclohexyle ou du menthyle, des radicaux aliphatiques ramifiés, comme de l'i-propyle, du s-butyle ou du t-butyle, des radicaux aromatiques, comme du phényle, du o-méthoxyphényle ou du p-trifluorométhylphényle, et des radicaux hétéroaromatiques, comme du pyridyle,
A', B' représentent du méthylène ou de l'éthylène, sous une forme substituée ou non substituée, par exemple de l'éthylidène ou du propylidène, du benzylidène, du o-phénylène,
L¹, L² représentent des hydrures, des sulfates, des phosphates, des nitrates, de l'acétonitrile, du méthanol, de l'acétylacétone, du tétrahydrofuranne, de l'acétate, du trifluoroacétate, du tosylate, de l'eau,
X représente du tétrafluoroborate, de l'hexafluorophosphate, de l'hexafluoroantimonate, du pentafluorobenzoate, du trifluorométhanesulfonate, du trifluoroacétate, du perchlorate, du p-toluènesulfonate, des tétraarylborates,
p représente 0, 1, 2, 3 ou 4,
m, n représentent 0, 1, 2, 3 ou 4,
p = m x n.

3. Complexes métalliques pontés en cis de la formule générale (I) : 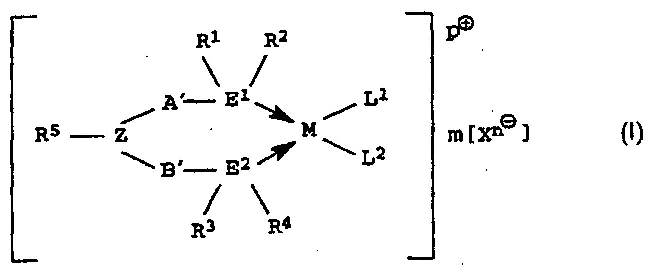 dans laquelle les substituants et indices ont la signification suivante :
R⁵ représente de l'hydrogène ou des substituants choisis parmi le groupe constitué de radicaux organiques du carbone en C₁-C₂₀ et de radicaux organosiliciques en C₃-C₃₀, sous une forme substituée ou non substituée, ou des substituants NR⁶R⁷,
M représente un métal du Groupe VIIIB du Système Périodique des Eléments,
E¹, E² représentent un élément du Groupe VA du Système Périodique des Eléments,
Z représente un élément du Groupe VA du Système Périodique des Eléments,
R¹ à R⁴ représentent des substituants choisis indépendamment l'un de l'autre dans le groupe constitué de radicaux organiques du carbone en C₁-C₂₀ et de radicaux organosiliciques en C₃-C₃₀, sous une forme substituée ou non substituée,
A', B' représentent des unités alkylène en C₁-C₄, sous une forme substituée et non substituée, des radicaux organiques pontés par des silyles ainsi que des radicaux NR⁸,
R⁶ à R⁸ représentent de l'hydrogène ou des substituants choisis parmi le groupe constitué de radicaux organiques du carbone en C₁-C₂₀ et de radicaux organosiliciques en C₃-C₃₀,
X représente d'une manière formelle des anions monovalents ou plurivalents,
p représente 0, 1, 2, 3 ou 4,
m, n représentent 0, 1, 2, 3 ou 4,
p = m x n, et
L¹, L² représentent d'une manière formelle des ligands chargés ou neutres, L¹ ou L², mais non L¹ et L² simultanément, représentant un halogénure.

4. Complexes métalliques pontés en cis de la formule générale (I) : 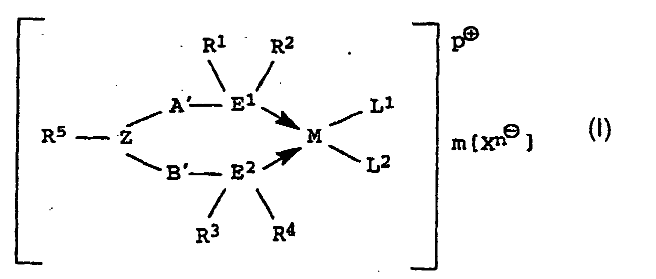 dans laquelle les substituants et indices ont la signification suivante :
R⁵ représente de l'hydrogène ou des substituants choisis parmi le groupe constitué de radicaux organiques du carbone en C₁-C₂₀ et de radicaux organosiliciques en C₃-C₃₀, sous une forme substituée ou non substituée, ou des substituants NR⁶R⁷, ou un radical de formule générale (II) : 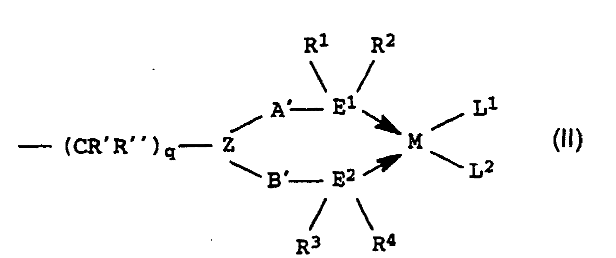 dans laquelle
q représente un nombre entier de 0 à 20, et
R', R" représentent de l'hydrogène ou des substituants choisis parmi le groupe constitué de radicaux organiques du carbone en C₁-C₂₀ et de radicaux organosiliciques en C₃-C₃₀,
les autres substituants ayant, dans (II) comme dans (I), la signification suivante :
M représente un métal du Groupe VIIIB du Système Périodique des Eléments,
E¹, E² représentent un élément du Groupe VA du Système Périodique des Eléments,
Z représente un élément du Groupe VA du Système Périodique des Eléments,
R¹ à R⁴ représentent des substituants choisis indépendamment l'un de l'autre dans le groupe constitué de radicaux organiques du carbone en C₁-C₂₀ et de radicaux organosiliciques en C₃-C₃₀, sous une forme substituée ou non substituée,
A', B' représentent des unités alkylène en C₁-C₄, sous une forme substituée ou non substituée, des radicaux organiques pontés par des silyles ainsi que des radicaux NR⁸,
R⁶ à R⁸ représentent de l'hydrogène ou des substituants choisis parmi le groupe constitué de radicaux organiques du carbone en C₁-C₂₀ et de radicaux organosiliciques en C₃-C₃₀,
L¹, L² représentent des carboxylates en C₁-C₂₀, des sulfonates organiques, des nitriles, des cétones, des éthers, des alcools, de l'eau, des radicaux aliphatiques en C₁-C₂₀, cycloaliphatiques en C₅ à C₃₀, aralkyliques en C₇-C₂₀, avec des radicaux aryle en C₆-C₁₄ et alkyle en C₁-C₆, ainsi que des radicaux aromatiques en C₆-C₂₀,
X représente d'une manière formelle des anions monovalents ou plurivalents,
p représente 0, 1, 2, 3 ou 4,
m, n représentent 0, 1, 2, 3 ou 4,
p = m x n.

5. Complexes métalliques suivant l'une des revendications 1 à 4, **caractérisés en ce que** E¹ et E² représentent du phosphore.

6. Complexes métalliques suivant l'une des revendications 1 à 5, **caractérisés en ce que** M représente du palladium.

7. Utilisation des complexes métalliques suivant l'une des revendications 1 à 6, comme catalyseurs ou comme composants essentiels de systèmes catalytiques, pour la copolymérisation de monoxyde de carbone avec des composés oléfiniquement insaturés.
